**Europäisches Patentamt**

**European Patent Office**

**Office européen des brevets**

(19)

(11) Veröffentlichungsnummer: **0 079 471**
**B1**

# (12) EUROPÄISCHE PATENTSCHRIFT

(45) Veröffentlichungstag der Patentschrift:
19.03.86

(51) Int. Cl.⁴: **G 06 F 7/48**

(21) Anmeldenummer: **82109625.2**

(22) Anmeldetag: **19.10.82**

(54) Schaltungsanordnung und Verfahren zur Bildung von Skalarprodukten und Summen von Gleitkommazahlen mit maximaler Genauigkeit.

(30) Priorität: **05.11.81 DE 3144015**

(43) Veröffentlichungstag der Anmeldung:
**25.05.83 Patentblatt 83/21**

(45) Bekanntmachung des Hinweises auf die Patenterteilung:
**19.03.86 Patentblatt 86/12**

(84) Benannte Vertragsstaaten:
**AT BE CH FR GB IT LI NL SE**

(56) Entgegenhaltungen:
**JP - A - 56 129 946**
**US - A - 4 338 675**

**ELEKTRONISCHE RECHENANLAGEN, Band 23, Nr. 4, August 1981, Seiten 155-163, München, DE., U. KULISCH: "Numerisches Rechnen - wie es ist und wie es sein könnte"**
**Electronic Engineering, March 1962, S. 144-147**
**IEEE Transactions on Computer, July 1977, S. 643-650**

(73) Patentinhaber: **Kulisch, Ulrich, Dr., Im Eichbäumle 37, D-7500 Karlsruhe (DE)**

(72) Erfinder: **Kulisch, Ulrich, Dr., Im Eichbäumle 37, D-7500 Karlsruhe (DE)**

(74) Vertreter: **Hanewinkel, Lorenz, Ferrariweg 17a, D-4790 Paderborn (DE)**

## Beschreibung

Die Erfindung betrifft eine Schaltungsanordnung in einer electronischen Rechenanlage mit einem Summierwerk, das eingangsund ausgangsseitig mit einem Akkumulatorspeicher verbunden ist, der aus Zellen zur Speicherung von Codes einer Basis besteht, und einer Steuervorrichtung, die eine Summierung von Zahlen, insbesondere Produkten aus Faktoren, die von der Rechenanlage in einer Gleitkommadarstellung der Schaltungsanordnung zugeführt werden, und eine Rundung und Ausgabe von der in dem Akkumulatorspeicher gebildeten Summe an die Rechenanlage in einer Gleitkommadarstellung steuert.

Bekannte Rechenanlagen führen die Operationen für ganze Zahlen, sofern der Bereich der auf der Rechenanlage darstellbaren Zahlen nicht überschritten wird, korrekt aus.

Eine reelle Zahl wird aber im allgemeinen durch einen unendlichen Dezimal (oder b-al) -Bruch dargestellt, z.B. $\pi = 3,14159$

Auf Rechenanlagen lassen sich diese nur approximieren, d.h., durch endlich viele Ziffern darstellen. Üblich sind Darstellungen durch sogenannte Festkomma- oder Gleitkommazahlen. Zur Approximation der reellen Zahlen werden dabei nur endlich viele Ziffern verwendet. Führt man für die auf der Rechenanlage darstellbaren Zahlen die Verknüpfungen +,-,x,/ nach den für reelle Zahlen üblichen Regeln aua, so erhält man i.a. nicht wieder eine Zahl aus dem Raater der auf der Rechenanlage darstellbaren (z.B. Fest- oder Gleitkomma-) Zahlen. Man denke etwa an die Multiplikation, bei der die Anzahl der Mantissenziffern verdoppelt wird. Will man als Ergebnis einer Verknüpfung zweier auf der Rechenanlage darstellbaren Zahlen wieder eine auf der Anlage darstellbare Zahl erhalten, so kann man auch die VerknOpfungen +,-,x,/ i.a. nur approximativ ausführen. Man spricht gelegentlich von gerundeten Verknüpfungen.

Diese approximativen Verknüpfungen für auf einer Rechenanlage darstellbare Zahlen wurden in der Vergangenheit mehr oder weniger aufgrund von Intuition implementiert. Sie sind auf allen heute auf dem Markt befindlichen Großrechenanlagen mit mehr oder weniger starken Mängeln behaftet.

Bei höheren mathematischen Strukturen, wie komplexen Zahlen oder Matrizen, erklärt man die Maschinenverknüpfungen nach folgender Überlegung. Man kennt die Formeln, nach denen beispielsweise die Verknüpfungen für komplexe Zahlen oder Matrizen auf die Verknüpfungen für reelle Zahlen zurückgeführt werden. Die Verknüpfungen für auf der Rechenanlage darstellbare komplexe Zahlen oder Matrizen erklärt man nun in der Weise, daß man diese Formeln hernimmt und mittels der Verknüpfungen für auf der Rechenanlage darstellbare reelle Zahlen (Gleitkommazahlen) ausführt. Dieses Vorgehen hat eine komplizierte Fehlerfortpflanzung und Fehleranalyse bei numerischen Algorithmen zur Folge.

Abhilfe gegen diese Mängel der bekannten Verknüpfungsverfahren schafft hier eine vom Erfinder entwickelte Theorie, welche in *(1) und (2) in geschlossener Form dargestellt ist. Darin wird vorgeschlagen, auf Rechenanlagen für reelle Zahlen, reelle Vektoren, reelle Matrizen, komplexe Zahlen, komplexe Vektoren und komplexe Matrizen, sowie für Intervalle über den reellen und komplexan Zahlen, Vektoren und Matrizen die Verknüpfungen nach dem Prinzip des Semimorphismus zu erklären, welches wir jetzt angeben wollen.

Es bezeichne M eine der genannten Mengen und N die betreffende, auf der Rechenanlage darstellbare Teilmenge von M. Dann sind die Verknüpfungen in N auszufOhren nach der Vorschrift: (Erklärung der Formelzeichen s. Tab. 1)

$$(RG) \quad \bigwedge_{a,b,\in N} \quad a \boxdot b := \Box(a \cdot b) \qquad \text{für alle Verknüpfungen}$$

Dabei bezeichnetn: M - N eine Abbildung, welche die folgenden Eigenschaften besitzt:

$$(R1) \quad \bigwedge_{a\in N} \Box\, a = a$$

(Rundung)

$$(R2) \quad \bigwedge_{a,b\in M} \quad (a \leqq b \implies a \leqq \Box b)$$

(Monotonie)

(R3) $\bigwedge\limits_{a \in M} \Box (-a) = -\Box a$

(Antisymmetrie)

$\Box$ ist also eine monotone und antisymmetrische Rundung.

*(1) Kulisch, U: Grundlagen des numerischen Rechnens- Mathematische Begründung der Rechnerarithmetik, Bibliographisches Institut Mannheim 1976

(2) Kulisch, U. and Computer Arithmstic in Theory and Miranker, W.L. Practice, Academic Press 1981

Bei den aufgeführten Intervallräumen verlangt man von der Rundung noch die zusätzliche Eigenschaft

(R4) $\bigwedge\limits_{a \in M} a \subseteq \Box a$

(nach oben gerichtet)

Für den Übergang von den reellen Zahlen |R zu einer in einer Rechenanlage darstellbaren Teilmenge (Gleitkommazahlen) definiert man darüberhinaus noch die beiden monotonen, gerichteten Rundungen $\triangle$ und $\nabla$, welche erklärt sind durch (RI), (R2) und

(R4) $\bigwedge\limits_{a \in \cdot |R} \nabla a \leqq a$ $\qquad$ $\bigwedge\limits_{a \in |R} a \leqq \triangle a$,

sowie die mittels diesen Rundungen und der Formel (RG) erk-lärten Verknüpfungen. Eindeutigkeitsfragen werden in (1) und (2) untersucht. Die monotone, nach unten gerichtete Rundung besagt in Worten, daß das ganze zwischen zwei Maschinenzahlen gelegene Intervall auf die linke Maschinenzahl abgebildet wird. Die monotone, nach oben gerichtete Rundung hat die umgekehrte Eigenschaft.

Im Rahmen einer umfangreichen, in (1) und (2) entwickelten Thaorie werden nun zahlreiche äußerst nützliche Eigenschaften der so erklärten Rundungen und Verknüpfungen in den oben aufgeführten Räumen nachgawiesen. U.a. besitzen dia so erklärten Verknüpfungen in allen oben aufgefOhrten Räumen maximale Genauigkeit in dem Sinne, daß zwischen dem korrekten Ergebnis der Verknüpfung a*b und seiner Approximation a $\boxed{\bullet}$ b kein weiteres Element des betreffenden Rasters mehr liegt.

Die in der oben skizzierten neueren Theorie erklärten VerknOpfungen sind i.s. vor allem in den höheren Räumen (komplaxa Zahlen, Matrizen usw.) von den auf herkömmlichen Rechenanlagen implementierten Verknüpfungen wesentlich verschieden.

Bei keiner derzeit auf dem Markt befindlichen Großrechenanlage werden die Verknüpfungen nach den oben angegebenen Formeln bereitgestellt. Es sind jedoch Bausteine in der Entwicklung bzw. bereits angekündigt *(3), (4), welche für den Übergang von den reellen Zahlen zu den Gleitkommazahlen Rundungen und die Verknüpfungen nsch den Formeln (RG), (R1,2,3), sowie auch die Rundungen $\nabla$ und $\triangle$ bereitstellen. Soweit gehört dies zum Stande der Technik.

Nicht zum Stande der Technik gehört aber die hardwareunterstützte Bereitstellung der Rundungen und Verknüpfungen nach den obigen Formeln bei komplexen Zahlen und komplexen Intervallsn, bei reellen und komplexen Vektoren und Matrizen, sowie reellen und komplexen Intervallvektoren und Intervallmatrizen. Am Institut des Erfinders wurden erstmals Programme entwickelt, welche alle diese Verknüpfungen software-mäßig bereitstellen.

In (1) und (2) wird weiterhin nachgewiesen, daß alle diese Verknüpfungen auf höchstem Sprachniveau bereitgestellt werden können, wenn für den Ubergang von den reellen Zahlen zu den Maschinenzahlen (Gleitkommazahlen) eine monotone und antisymmetrische Rundung $\bigcirc$ (beispielsweise eine Rundung zur nächstgelegenen Maschinenzahl), die beiden monotonen, gerichteten Rundungen $\nabla$ und $\triangle$, die mittels diesen drei Rundungen nach der Formel (RG) erklärten Verknüpfungen für die Addition (+), Subtraktion (-), Multiplikation (.) und Division (/) von Maschinen (Gleitkomma) Zahlen, sowie das Skalarprodukt (*) reeller Vektoren beliebiger Dimension zur Verfügung stehen. Es gibt demnach insgssamt die folgenden 15 Elementarverknüpfungen:

$$\oplus \ominus \odot \oslash \cdot \quad \nabla\!\!\!\!+ \ \nabla\!\!\!\!- \ \nabla\!\!\!\!\cdot \ \nabla\!\!\!\!\cdot \ \ \triangle\!\!\!\!+ \ \triangle\!\!\!\!- \ \triangle\!\!\!\!\cdot \ \triangle\!\!\!\!\cdot\!\!\!\!$$

*(3) Coonen, J. et al: A Proposed Standard for Floating-point Arithmetic, SIGNUM Newsletter, Oct. 1979
(4) INTEL 12 1586-001: The 8086 Family User's Manual, Numeric Supplement, July 1980
Die traditionelle Numerik verwendet davon nur die vier im herkömmlichen Sinne gerundeten Verknüpfungen $\oplus$, $\ominus$, $\odot$ und $\oslash$. Die sogenannte Intervallrechnung macht Gebrauch von den weiteren Verknüpfungen $\nabla\!\!\!\!+$, $\nabla\!\!\!\!-$, $\nabla\!\!\!\!\cdot$, $\nabla\!\!\!\!\cdot$ und $\triangle\!\!\!\!+$, $\triangle\!\!\!\!-$, $\triangle\!\!\!\!\cdot$, $\triangle\!\!\!\!\cdot$.

Wie gesagt, gehören diese Verknüpfungen: Addition, Subtraktion, Multiplikation und Division nach (RG) mit den Drei Rundungen $\bigcirc$, $\nabla$ und $\triangle$? zum Stande der Technik.

Nicht zum Stande der Technik gehören hingegen die hardwareunterstützte Ausführung von Skalarprodukten (inneren Produkten von Vektorsn) beliebiger Dimension nach (RG) mit den drei Rundunge $\bigcirc$, $\nabla$ und $\triangle$, also die Verknüpfungen $\odot$, $\nabla\!\!\!\!\cdot$ und $\triangle\!\!\!\!\cdot$.

Bezeichnet T die Menge der auf einer Rechenanlage darstellbaren Gleitkommazahlen, so bedeutet dies für Vektoren von Gleitkommazahlen a = (ai) und b = (bi), ai,bi, $\varepsilon$ T, i = 1(1)n, die Ausführung der Formeln

$$(RG) \quad \bigwedge_{a,b\in T^n} a\odot b := \bigcirc(\sum_{i=1}^{n} a_i \cdot b_i)$$

$$(RGu) \quad \bigwedge_{a,b\in T^n} a\,\nabla\!\!\!\!\cdot\,b := \nabla(\sum_{i=1}^{n} a_i \cdot b_i)$$

$$(RGo) \quad \bigwedge_{a,b\in T^n} a\,\triangle\!\!\!\!\cdot\,b := \triangle(\sum_{i=1}^{n} a_i \cdot b_i)$$

für beliebiges n. Dabei bezeichnet das Multiplikationsund Summationszeichen auf der rechten Seite jeweils die korrekte Multiplikation und Summation für reelle Zahlen. (Erklärungen zu den Formelzeichen s. Tab. 1).

In (1) und (2) wird durch Angabe von Algorithmen nachgewiesen, daß sich die Formeln (RG), (RGu) und (RGo) auf Rechenanlagen softwaremäßig implementieren lassen.

Die softwaremäßige Implementierung der Alogrithmen führt zwar zu den gewünschten Ergebnissen maximaler Genauigkeit, sie verlängert aber die Operationszeiten auf ein Mehrfaches. Außerdem werden die internen Schnellspeicher bei Durchführung der Operationen belegt, wodurch diese für andere häufig auftretende Operationen nicht zur Verfügung stehen, was den gesamten Rechenablauf weiter verlangsamt und zusätzlichen programmorganisatorischen Aufwand verlangt.

Es ist aus JP-A-56-129946 ein Rechenwerk bekannt, in dem Gleitkommazahlen über ein Summierwerk einem Akkumulatorspeicher zugeführt werden und aus diesem nach einer Rundung die Summe in einer Gleitkommadarstellung ausgegeben wird, wobei eine höhere Genauigkeit dadurch erreicht wird, daß die Summe im Akkumulator in einem Sonderformat bestehend aus einem Bruch und einem Exponenten mit höherer Genauigkeit dargestellt wird. Es treten jedoch Fehler bei der Konvertierung in das Sonderformat und bei der Rückwandlung in bestimmten Umfang auf.

Weiterhin ist aus IEEE Trans. on Computers, July 1977, S. 643-650 insbes. im Kapitel III, Abs. 1 bekannt, daß durch die Verwendung eines unendlich langen Akkumulators eine maximale Genauigkeit theoretisch erreichbar ist. Die für die Praxis notwendige, dort angegebene Begrenzung der Länge des Akkumulators führt jedoch in Verbindung mit den dort untersuchten Rundungen nur zu einer statistischen, empirischen Aussage über erreichbare Genauigkeiten.

Es ist Aufgabe der Erfindung, ein Rechenwerk zu offenbaren, das die hardwareunterstützte Realisierung der genannten Verknüpfungen mit maximaler Genauigkeit ermöglicht und die Operationen bereitstellt, so daß insbesondere für Skalarprodukte beliebiger Dimension die Berechnung der Formel (RG) für alle monotonen Rundungen, insbesondere auch für die monotonen gerichteten Rundungen $\nabla$ und $\triangle$ ((RGu) und (RGo)) hardwaremäßig unterstützt wird, und so die o.g. Nachteile der softwaremäßign Implementierung der Algorithmen vermieden werden.

Die Lösung der Aufgabe ist in Anspruch 1 angegeben. Mit dem Ausdruck kleinster Exponent ist der betragsmäßig größte negative Exponent bezeichnet.

Es gibt verschiedene Ausführungsformen des Rechenwerks nach der Erfindung zur hardware-unterstützten Berechnung der Formeln (RGL), (RGu) und (RGo) und bedarfsweise ähnlich gerundeter Summen. Beispielhaft seien hier einige genannt.

4

# 0 079 471

Jede Realisierung hängt von der Basis des verwendeten Zahlenaystems und den gewählten Zahlenformaten ab. In den Beispielen verwenden wir Gleitkommazahlen in sogenannter Vorzeichenbetragsdarstellung mit Exponenten. Für andere Darstellungen( z.B.Komplement-Darstellung negativer Zahlen in der Mantisse und/oder Charakteristik im Exponenten) ist das Rechenwerk in bekannter Weise mit äquivalenten Verknüpfungskomponenten aufzubauen.

Definition der Zahlendarstellung in den Beispielen:

Eine normalisierte Gleitkommazahl x (in Vorzeichsnbetragsdsrstellung) ist eine reelle Zahl in folgender Gestalt:

$x = {}^* m \cdot b^e.$

Dabei bezeichnet ${}^*\varepsilon\{+,-\}$ das Vorzeichen (sign(x)), m die Mantisse (mant(x)), b die Basis des verwendeten Zahlensystems und e den Exponenten (exp(x)). b ist eine natürliche Zahl mit $b > 1$. Der Exponent ist eine ganze Zahl und liegt zwischen zwei natürlichen Zahlen $e1 \leqq e2$. m ist die Mantisse. Sie hat die Gestalt

$$m = \sum_{i=1}^{L} x\,[i] \cdot b^{-1}.$$

Die x [i] heißen die Ziffern der Mantisse. Es ist $x\,(i)\varepsilon\{0,1...,b-1\}$ für alle $i = 1(1)n$ und $x\,[1] \neq 0$.

Die Menge aller normalisierten Gleitkommazahlan anthält die Zahl 0 nicht.

Um eine eindeutige Darstellung der 0 zu haben wird zusätzlich vereinbart sign(O) $= +$,mant(0)$= 0,00 \ 0$ (n 0 nach dem Komma) und exp(O) $= e1$.

Ein solches Gleitkommasystem hängt von vier Konstanten b, L, e1 und e2 ab. Wir bezeichnen es mit $S = S(b,L, e1, e2)$.

Zur Ausführung der Formeln (RG), (RGu) und (RGo) warden die Produkts $a_i.b_i$ in der Rechenanlage korrekt ausgeführt. Dies liefert eine Mantisse von 2L Ziffern und einen Exponenten, der im Bereich $2e1 - 1 \leqq e \leqq 2e2$ liegt. Die Berechnung des Skalarproduktes reduziert sich dann auf die Auswertung von Summen der Form

$$\square \Big(\sum_{i=1}^{n} c_i\Big), \qquad n \in \mathbb{N}, \quad c_i = a_i \cdot b_i.$$

Dabei sind die $c_i$ doppeltlange Gleitkommazahlen, d.h.
$c_i\varepsilon S(b,2L,2e1-1,2e2)$ für alle $i = 1(1)n$.

Das Summierwerk ist jeweils so ausgeführt, daß die in (II) auftretende Summe korrekt, d.h. ohne Informationsverlust, erzeugt werden kann.

Hardwaremäßige Realisierungen dafür gibt es bisher nicht. Eine schnelle hardwaremäßige oder hardwaremäßig unterstützte Bereitstellung von (I) bzw. (II) bedeutet für die Numerik eine echte Revolution [5]

[5] Kulisch, U: Numerisches Rechnen - wie es ist und wie es sein könnte, Elektronische Rechenanlagen 1981. Heft 4, S. 155 - 163

In den Fig. 1 bis 6 sind verschiedene Ausführungsformen des Summierwerks dargestellt für die Berechnung der Formeln

Fig. 1 Parallelsummierwerk; Fig. 1a bis e Details zu Fig. 1

Fig. 2 Serialsummierwerk;

Fig. 3 wortweise organisierter Akkumulatorspeicher, Summierwerkslänge entsprechend der Wortlange

Fig. 4 Summierwerk mit zwei Akkumulatorspeichern und integriertem Multiplizierwerk;

Fig. 5 Grundschaltungen;
a bis e

Fig. 6 Übersichtsschaltung zu Fig. 4;

Fig. 7 Ablaufdiagramm zu Fig. 6

Tab. 1 Tabelle der Formelzeichen;

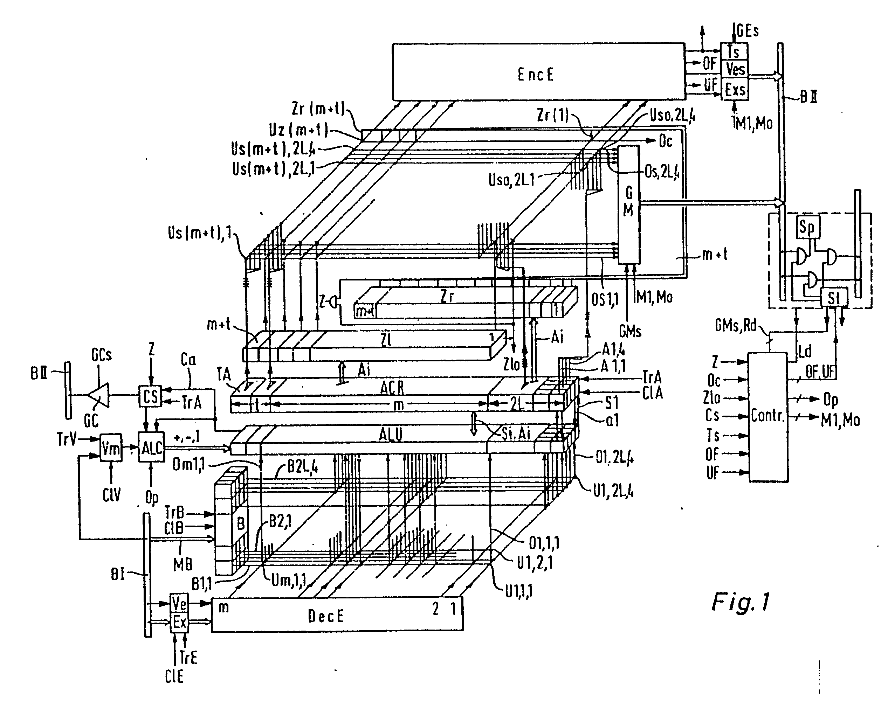

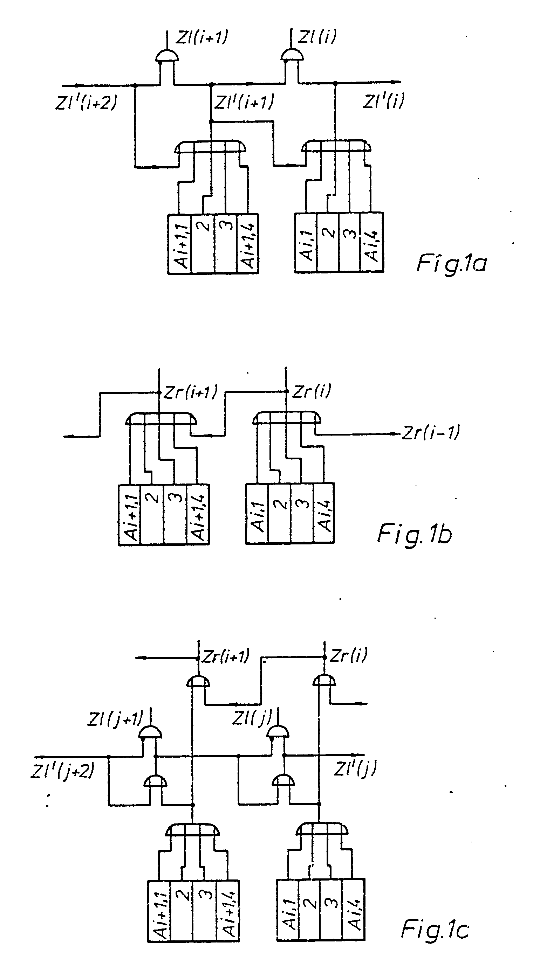

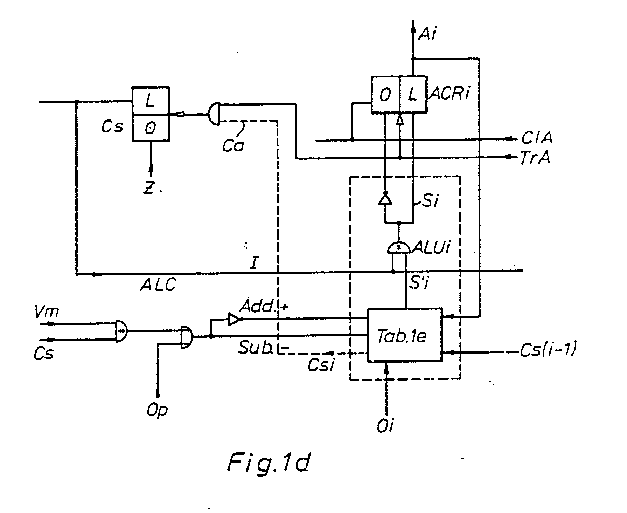

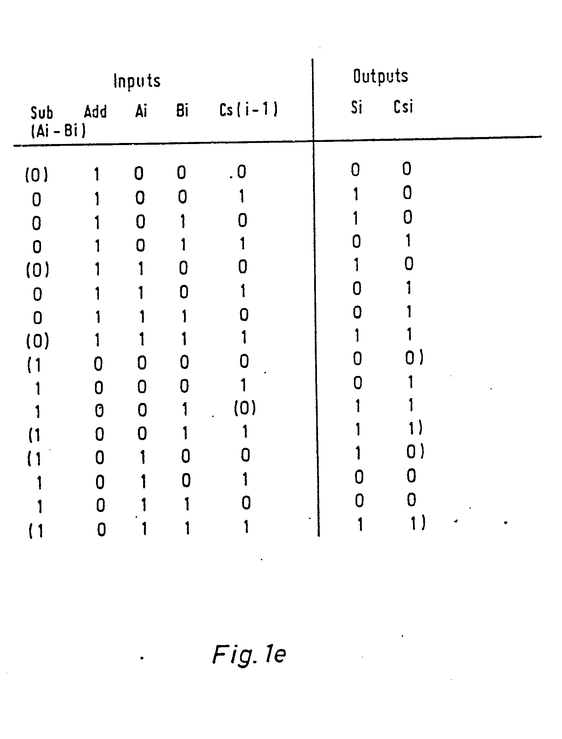

Tab. 2 Ablauf zu Fig. 1

Tab. 3 Bezeichnungstabelle zu Fig. 1
a/b

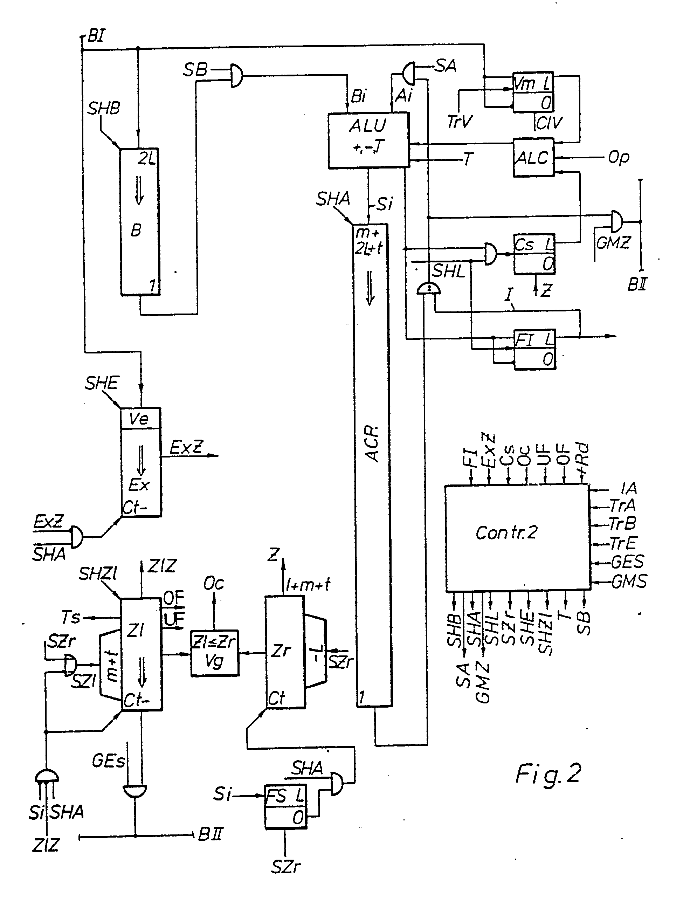

Tab. 4 " zu Fig. 2

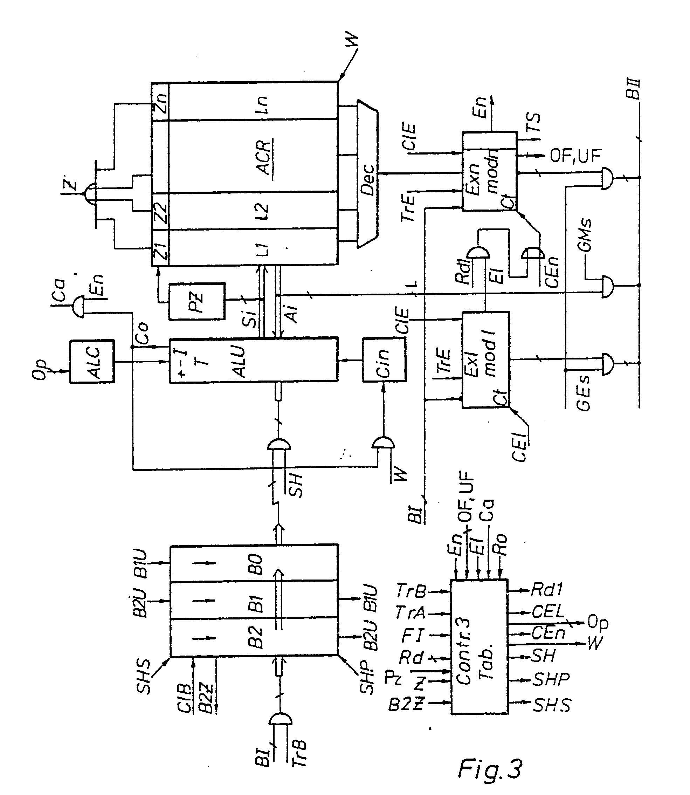

Tab. 5 " zu Fig. 3

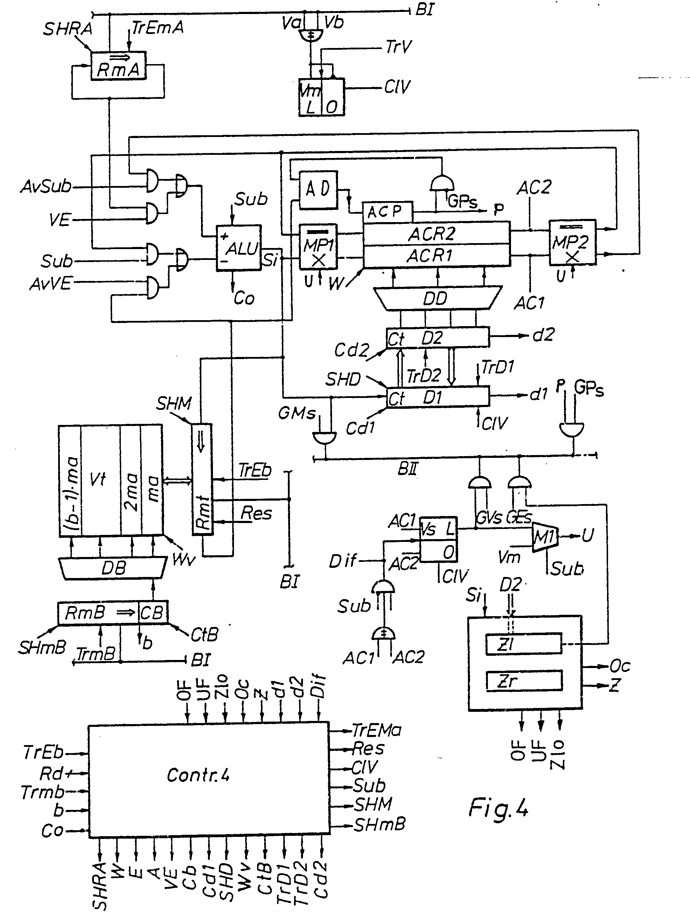

Tab. 6 " zu Fig. 4

Im Beispiel Fig. 1 ist ein Akkumulatorregister ACR vorgesehen, das so lang ist, daß alle Summanden ohne Informationsverlust aufsummiert werden können, d.h., von Stellenzahl $2e2 + 2L + |2e1|$. Darin kann man zunächst alle Summanden stellenmäßig korrekt ohne Exponenten mit Festkommadarstellung speichern Um such bei der Addition eventuell auftretende Überträge aufzufangen, können zweckmäßig links noch einige (t) weitere Akkumulatorstellen TA der Basis hinzugefügt werden. Es kann dann jede Summe (II) von n Summanden ohne Informationsverlust, d.h. korrekt in dem langen Akkumulstor ausgewertet werden. Dabei können sogar b·

5

Überläufe auftreten und ohne Informetionsverlust verarbeitet werden.

Als Beispiel sei angenommen:

b = 16, e1 = -72, e2 = 72, L = 14 und t = 4.

Dann ist der Akkumulator t + |2e1| + 21 + 2e2

aus 320 hexadezimal Gruppen oder 1280 bit-Stellenspeichern aufgebaut.

Bei einem ähnlichen Summierwerk mit Dezimalarithmetik können zweckmäßig folgende Stellenzahlen gewählt werden:

b* = 10, e1* = - 99, e2* = 99, L* = 13 und t* = 4.

In diesem Fall hätte der Akkumulator 426 Dezimalspeichergruppen. Dies entspricht 1704 bit-Stellenspeichern.

Abhängig von den verwendeten Baugruppen kann es zweckmäßig sein, den Akkumulator um so viele Stellen zu verlängern, daß sich für die Gesamtlänge ein ganzzahliges Vielfaches von L ergibt.

Fig. 1 zeigt nun ein Akkumulatorregister ACR aus Speicherzellen mit daran eingangs- und ausgangsseitig angeschlossenem Summierwerk ALU. Es sind jeweils Tetraden bzw. Dekaden schräg gestaffelt dargestellt. Die Übertragsschaltung läuft im Summierwerk ALU von rechts nach links durch die Tetraden und von einer Tetrade zur nächsten. Der höchste Übertrag wird einer Speicherstelle Cs zugeführt.

Die Operanden werden in der beschriebenen Gleitkommadarstellung auf einem Informationsbus BI der Schaltungsanordnung zugeführt.

Mit einem Steuertakt Cl E wird das Register Ex, das den Exponenten speichert, und die zugehörige Vorzeichenstelle Ve gelöscht, und mit dem Steuertakt TrE wird die Information vom Informationsbus BI übernommen.

Die Mantisse MB von doppelter Länge (2L), die durch die anderweitig ausgeführten Teilmultiplikationen entsteht, wird nach Löschung des Registers B durch Steuertakt CIB mit dem an-schließend gegebenen Steuertakt TrB vom Bus BI in das Register 8 als Operand übertragen. Weiterhin wird des Vorzeichen der Mantisse nach Löschung der Speicherstelle Vm durch Steuertakt CIV mit dem anschließenden Steuertakt TrV in die Speicherstelle Vm übernommen.

Der Exponent und dessen Vorzeichenstelle werden von dem Register Ex, Ve in einen Dekoder DecE geführt, der m = 2|e1| + 2e2 Ausgänge besitzt. Diese Ausgänge sind über ein Und- und üdernetzwerk so verknüpft, den die Mantisse um den Exponentenwert verschoben parallel stellenrichtig am Ausgang erscheint und so dem zweiten Operatoreingang des Summierwerkes ALU zugeführt wird. Es sind somit m · 2L · 4 Und-Gatter "U" vorhanden und m + 2L Oder-Gatter "O". Diese Oder-Gatter können zweckmäßig als "wired-or" ausgeführt werden. In der Fig. 1 sind einige der Gatter als Punkte (Und-Gatter) und Linien (Oder-Gatter) mit dreifachen Indizes zu ihrer Lokalisierung dargestellt. Die Gleichungen für das Netzwerk, das auch als Multiplexer bezeichnet werden kann, sind gegeben durch:

$$O_{k,1,r} = \bigvee_{j=1}^{2L} \qquad U_{k,j,r} = \bigvee_{j=1}^{2L} (DecE_{(i+j)} \wedge B_{j,r});$$

$$k = 1,2\ldots m$$
$$r = 1,2,3,4$$

Die zweiten Eingänge des Summierwerkes ALU sind mit den Ausgängen Ai der Akkumulatorspeicherstellen entsprechend verbunden und die Summenausgänge Si des Summierwerkes ALU sind mit den entsprechenden Eingängen der Akkumulatorspeicherstellen verbunden. Mit dem Steuertakt TrA wird die Summe bzw. das Ergebnis der Operation des Summierwerkes ALU in den Akkumulator ACR übernommen. Sofern ein Übertrag entsteht, z.B. bei Vorzeichenumkehr, wird das Signal Ca vom Summierwerk ALU mit dem gleichen Steuertakt TrA in die Speicherstelle Cs so übernommen, daß deren Inhalt invertiert wird. Die Speicherstelle Cs wird beispielsweise durch ein zählendes Flipflop gebildet.

Die Signale der Vorzeichenstellen Vm und Cs werden in der Steuerschaltung ALC des Summierwerks ALU ausgewertet, wodurch die Steuersignale Addition (+) oder Subtraktion (-) für das Summierwerk ALU erzeugt werden.

Außer dem Summierwerk ALU sind an den Akkumulator ACR Nullprüfschaltungen Zl und Zr angeschlossen. Mit der Schaltung Zl wird die erste signifikante Stelle von links ermittelt. Die logische Gleichung der Prüfschaltung ist

6

$$Z1(i) = \left( \bigvee_{j=i}^{m+t} \bigvee_{k=1}^{4} A_{j,k} \right) \wedge \overline{\left( \bigvee_{j=i+1}^{m+t} \bigvee_{k=1}^{4} A_{j,k} \right)};$$

$$j = 1,2\ldots(m+t)$$
$$j = (m+t) \sim \text{höchstwertige Stelle}$$

Sind von links mehr als $m+t$ Stellen Null, so wird von einer weiteren Stufe das Signal Zlo abgegeben nach der logischen Gleichung

$$Z1_0 = \overline{\left( \bigvee_{j=1}^{m+t} \bigvee_{k=1}^{4} A_{j,k} \right)}$$

Ein Über- oder Unterlauf der Summe aus dem zugelassenen Bereich für das Ergebnis wird durch Oderschaltungen OF und UF ermittelt:

$$OF = \bigvee_{i=2|e1|+e2}^{m+t} Z1(i); \quad UF = \bigvee_{i=1}^{e1-1} Z1(i) \vee Z1o \wedge \overline{Z}$$

Die Schaltung Zr prüft, ab welcher Stelle von rechts der Akkumulatorspeicher gültige (von Null verschiedene) Ziffern enthält. Die logische Gleichung ist:

$$Zr(i) = \bigvee_{j=1}^{i} \bigvee_{k=1}^{4} A_{j,k}; \quad j = 1,2,\ldots i;$$

$$j = 1 \quad \text{niedrigstwertige Stelle}$$

Durch die Ausgangssignale Zl gesteuert; werden die Ausgänge Ai des Akkumulatorregisters ACR ab der höchsten signifikanten Stelle über ein Und- und Odernetzwerk den Ausgangsgattern GM zugeführt. Die Gleichungen der Und- und Odergatter Us,Os, die einen Demultiplexer bilden, sind folgende:

$$O_{s\,k,r} = \bigvee_{j=0}^{m+t} U_{s\,j,k,r} = \bigvee_{j=0}^{m+t} Z1_j \wedge A(2L-k+j,r;$$

$$k = 1,2\ldots 2L$$
$$r = 1,2,3,4$$

In der Fig. 1 sind die Und-Gatter Us jeweils wieder als Punkte und die Oder-Gatter als Linien entsprechend einem "wired-or" dargestellt. Die Ausgangsgatter GM sind beispielsweise triestate-Gatter, die durch das Steuersignal GMs auf den Informationsbus BII ihre Eingangssignale durchschalten.

Durch eine weitere Gatterschaltung Dc, Uz werden die Signale Zl und Zr paarweise miteinander verknüpft, so daß am Ausgang Oc ein Signal entsteht, wenn rechts von dem Bereich der Länge 21 der gültigen Stellen, die auf die Ausgangsgatter GM geführt werden, noch weitere von Null verschiedene Signale auftreten. Dieses Signal dient zur Auslösung von Rundungsoperationen.

$$Oc = \bigvee_{j=1}^{m+t} Zr_j \wedge Zl_j = \bigvee_{j=1}^{m+t} Uz_j$$

Weiterhin ist das Signal Zlo mit dem Signal Zr (m+t) im Und-Gatter Z verknüpft, dessen Ausgangssignal anzeigt, daß der gesamte Inhalt des Akkumulatorregisters ACR Null ist.

$$Z = Zr(m+t) \wedge Zlo$$

Die Signale Zl sind weiterhin auf den Verschlüßler EncE geführt, an dessen Ausgang der Exponent der im Akkumulatorregister gespeicherten Summe an die Gatter Exs, dessen Vorzeichen an Gatter Ves und ein Überlaufkennzeichen bei Belegung der Überlaufstellen TA des Akkumulatorregisters ACR mit gültigen Stellen der Mantisse an Gatter Te abgegeben werden.

Mit dem Steuersignal GEs können die genannten Signale auf den Informationsbus BII aufgeschaltet werden. Ebenso kann der Ausgang der Speicherstelle Cs Ober Gatter GC mit Steuersignal GCs auf den Bus BII geschaltet und damit der Rechenanlage zugeführt werden.

Die Steuersignale CIA, CIB, CIE, CIV sowie die Steuersignale TrA, TrB, TrE, TrV und GMs, GEs, GCs werden von dem Obergeordneten Steuerwerk St der Rechenanlage der Schaltungsanordnung zugeführt, sobald die zu Obernehmenden Informationen auf dem Informationsbus BI bereitstehen oder vom Bus BII abgenommen werden können.

Die Signale Z, Oc, Ce, Ts, OF, UF, Zlo können ebenfalls über Gatter auf den Informationsbus BII geschaltet werden oder unmittelbar den Steuerwerken Contr und St zugeführt werden. In der gezeigten Auaführung werden Steuersignale Op, die im Steuerwerk Contr erzeugt werden, direkt der Summierwerkateuerung ALC zugeführt und von dieser ausgewertet mit folgenden Funktionen:

1. Bei Auftreten des Überlaufs Cs, der anzeigt, daß die Summe im Summierwerk negativ ist, wird über die Inversionsoperation I im Summierwerk ALU die Summe dem Akkumulatorspeicher ACR invertiert zur Abspeicherung geliefert.

2. Sind die Inhalte der Vorzeichenspeicher Vm und Cs verschieden, so erfolgt die Ausgabe der Steuersignale für eine Subtraktion atatt der Addition, die andernfalls bei gleichen Vorzeichen angesteuert wird.

3. Bei Auftreten des Steuersignale Op wird ohne Rücksicht auf die Vorzeichen in Ce und Vm eine Subtraktion ausgeführt:

4. Bei Auftreten des Signale Z, d.h., daß der Inhalt des Akkumulatorregistes ACR Null ist, wird die Speicherstelle Cs gelöscht.

In Tab. 2 ist der Steuerungsablauf für die Rundung $\bigcirc$ zur nächstgelegenen Maschinenzahl zu Fig. 1 dargestellt. Es werden nach dem Löschen des Akkumulatorregisters nacheinander in den Schritten 2a, 2b, 3 die Summanden dem Summierwerk zugeführt und addiert. Nach Abschluß aller Summierungsoperationen wird das ungerundete Ergebnis in einen Speicher Sp oder ein Register übernommen. Dann werden folgende Prüfungen vorgenommen:

Ist ein Unter- oder Überlauf aufgetreten, so erfolgt eine Meldung UF bzw. üF zur Auswertung durch die Rechenanlage.

Wird durch Auswertung der Signsle Z und Dc festgestellt, daß ein Rest aufgetreten ist, so wird eine Rundung vorgenommen, indem durch Abziehen der ungerundeten Summe der Rest gebildet wird und dieser nach Verdoppelung der ungerundeten Summe hinzu addiert wird.

Tritt bei der Rundung ein Überlauf DF auf, so wird diese Meldung DF sn die Rechenanlage gegeben, andernfalls wird das gerundete Ergebnis in den Speicher Sp übertragen.

Wenn nicht die Rundungsart $\bigcirc$ zur nächstgelegenen Maschinenzahl, sondern eine der anderen Rundungsarten von der Rechenanlage mit der Signalgruppe Op angefordert wird, so wird der Ablauf abhängig vom Auftreten der Signale Z, Oc, Zlo, Cs, UF, OF so gesteuert, daß die Rundung nach oben, unten oder innen gerichtet ist, vgl. Tab. 1, erfolgt. Hierbei ist der Bereich um Null besonders zu behandeln. Tritt nämlich ein Ergebnis ungleich Null, was durch Signal Z≠O angezeigt wird, auf und dazu Signsl UF, dann muß je nach Vorzeichen Cs des Ergebnisses und der gewünschten Richtung der Rundung des Ergebnis Null sein, oder in der Mantisse muß die höchste Stelle eine Eins und die niedrigeren Stellen Null sein. Es ist deshalb in der Schaltung vorgesehen, daß unter dieser Bedingung die Ausgabe dieser genannten Mantisse durch das Steuersignal MI erzwungen wird. Außerdem muß in allen Fällen, in denen das Signal MI auftritt, durch dss Gatternetzwerk EncE der Exponent Exs mit der Größe e1 ausgegeben werden. Die Ausgabe der Zahl Null wird durch Signal MO gesteuert. Die logischen Gleichungen sind:

$$M1 = \bar{Z} \wedge UF \wedge (Cs \wedge \nabla \vee \bar{Cs} \wedge \triangle)$$

$$MO = Z \vee UF \wedge (\bigcirc \vee Cs \wedge \triangle \vee \bar{Cs} \wedge \nabla)$$

## 0 079 471

In den Figuren 1a bis 1e sind schaltungstechnische Einzelheiten der Baugruppen in Fig. 1 dargestellt. Selbstverständlich können auch andere bekannte Schaltungen angewandt werden. Im Falle der Verwendung von Dezimalarithmetik muß das Summierwerk durch bekannte Dezimalkorrekturschaltungen ergänzt werden.

In der Schaltung ist vorgesehen, daß das Ergebnis mit doppelter Länge (2L) ausgegeben wird. Soll es mit normaler Länge L ausgegeben werden, können die Gatteranordnungen Zl und Zr um weitere L Stellen verlängert werden, und die Gatter Oc, UF und OF müssen ebenfalls um L Stellen verlängert werden und die Verknüpfung in Oc einem Versatz um L Stellen angepaßt werden.

Soll nicht die Möglichkeit der Ausgabe der ungerundeten vollständigen langen Summe vorgesehen werden, so können die Schaltungen Us, Os, EncE, GM, Exs entsprechend dem maximalen Bereich der Summe mit der Länge $|e1|+e2+L$ verkürzt ausgeführt werden.

Fig. 1a zeigt eine Löaungamöglichkeit für die Nullabfühlung von links. Die Signale Zl werden pro Tetrade des Akkumulatorspeichers erzeugt, und das Hilfssignal Zl', das anzeigt, daß linksseitig alle Stellen Null enthalten, wird zur nächst niedrigeren Stelle weitergeleitet.

Fig. 1b zeigt eine Schaltung zur Erzeugung der Nullabfühlsignale Zr von rechta. Die Signale werden von Tetrade zu Tetrade weitergegeben.

Fig. 1c zeigt eine Alternative zu 1a und 1b. Die Oder-Gatter, in denen die Tetraden auf Null geprüft werden, sind dabei nur einfach vorhanden.

Diese Schaltungsbeispiele können durch äquivalente Versionen ersetzt werden. Auch ist es möglich, das Summierwerk teilweise in die Abfühlschaltungen zu integrieren.

Fig. 1d zeigt eine Schaltung für die Summierwerksteuerung ALC, in der die Steuersignale für Addition und Subtraktion erzeugt werden.

Weiterhin ist eine Stelle des Summierwerks ALU und des Akkumulatorregisters ACR mit den Verbindungen dargestellt. Eine Logiktabelle für die Summierung, die im Summierwerk enthalten ist, ist in Fig. 1e gezeigt. Für den schaltungstechnischen Aufbau von Logikbausteinen in Form einer Tabelle oder mit Halbaddieren gibt es bekannte Lösungen. Weiterhin kann das Summierwerk durch redundante Übertragsschaltungen zur Beschleunigung der Durchschaltung ergönzt werden. Die Tabelle kann durch Weglassen der eingeklemmerten Terme reduziert werden.

Die Steuerung Contr kann eine Ablaufsteuerschaltung mit fester Verschaltung der Logik oder ein ladbares mikroprogrammierbares Steuerwerk sein. Die Programmladung kann über Anschluß Ld von der Rechenanlage erfolgen.

In Fig. 2 ist sine Schaltung zur Lösung der Aufgabe der Erfindung dargestellt, die mit geringerem schaltungstechnischen Aufwand aber größerem Zeitaufwand die gleichen Ergebnisse liefert. Die Bezeichnungen sind für äquivalente Funktionen wie in Fig. 1 gewählt werden. Die Bedeutung der Zeichen und die technische Funktion ist in Tab. 4 zusammengestellt.

Die Summanden werden in Serie auf Leitung BI von der Rachenanlage geliefert und über Leitung BII in Serie abgegeben. Selbstverständlich ist such eine Bereitstellung in paralleler Form in die Register 8 und Ex und eine Entnahme der Summe aus einem bestimmten Abschnitt des Schieberegisters ACR und aus dem Zähler Zl möglich, ohne das Prinzip zu ändern.

Die Steuerungsabläufe werden durch das Steuerwerk Contr. 2, das als untergeordnetes Werk des Steuerwerkes der übergeordneten Rechenanlage angesehen werden kann, vorgegeben. In ihm werden die Impulsserien zum Schieben und Zählen und Steuergrößen für die Gatter abhängig ven den Zustande- und Prüfsignalen in den Registern und Zählern und von den Steuersignalen äus der übergeordneten Rechenanlage erzeugt. Die vorzeichenebhängige Steuerung der Operetionen des Summierwerkes geschieht wie im Parellelrechenwerk. Die Inversion bei Auftreten ven negativen Summen kann aber nicht ohne weiteres vorgenommen werden, da der Überlauf erst am Ende des Durchlaufe auftritt. Es wird daher ein Merkerflipflop FI gesetzt, des im nächsten Umlauf über ein Antivalenzgatter den Inhalt umkehrt. Solange dae Flipflop FI gesetzt ist, können die Zählerstände Zl, Zr nicht ausgewertet werden; ggf. muß also ein zueätzlicher Umlauf des Regietere ACR erfolgen. In einem solchen Fall wird die Infermation ohne weitere Änderung durch des Bummierwerk geleitet, wozu die Steuergröße T dient.

Ist ein Summand in die Register B, Ex, Vm übernommen, so werden die Zähler Zr auf Anfangwert-L und Zl auf Anfangwert $m+t$ gesetzt. Dann wird im Akkumulatorspeicher ACR geschoben und im Zähler Ex solange haruntergezählt, bis der Exponent Null ist und Signal ExZ auftritt. Dieses ver-anlaßt über das Steuerwerk Contr. 2, daß auch das Register 8 durch Schiebeimpulse SHB beaufschlagt wird und der Eingang zum Summierwerk am Gatter mit Steuersignal SB geöffnet wird. Entstehende Überträgs werden in bekannter beise innerhalb des Summierwerkes von Schiebetakt zu Schiebetakt zwischengespeichert und übertragen.

Während des gesamten Durchlaufe das Akkumulatorspeichers liegen die Zähleingänge Ct, Ct- dar Zähler Zl und Zr über Gatter an dem Summenausgang Si des Summierwerkes ALU. Dabei wird der Zähler Zl über das Setzsignal SzL am Setzeingang mit jeder Eins auf den Endwert gesetzt und mit den Nullen heruntergezählt, so daß der Inhalt am Ende des Umlaufs um 2 L Stellen nach rechts versetzt die höchste von Null verschiedene Stelle im Register ACR angibt.

Im Zähler Zr werden die hinteren Nullen im Register ACR gezählt, bis durch die erste Eins das Flipflop FS die Zählung beendet.

Sind alle Stellen im Register ACR Null, so tritt Signal Z und auch ZIZ an den Zählern auf, die anzeigen, daß die Zähler voll bzw. leer sind.

Der Vergleicher Vg, in dem die Inhalte der Zähler in bekannter Weise verglichen werden, zeigt an, ob mehr als

9

L Stellen mit signifikanten Werten besetzt sind und somit ein Rast zur Rundung vorhanden ist.

Die Operationen verlaufen dabei im Prinzip wie beim Parallelrechenwerk nach Tab. 2. Der Inhalt von Zähler Zl, der auch als Schieberegister ausgebildet ist, kann dazu auf den Bus BII und über Verkopplung mit Bus BI in Register Ex übertragen werden. Durch den Inhalt von Register Ex gesteuert, kann dann, mit Signel ExZ gestartet, bei einem Umlauf des Inhalts von Register ACR über Gatter GMC und Bus BII auf Bus B1 der Rest der ungerundeten Summe in das Schieberegister B transferiert werden. Das Steuersignal Rd von dsr Rechenanlage steuert dazu über Steuerwerk Contr. 2 die Schlebeimpulse und das Steuersignal GMC. Tritt nur das Steuersignal GMs auf ohne Steuersignal Rd, so werden nicht der Rest, sondern die oberen Stellen der Mantisse durch Gatter GMC auf den Bus BII gesteuert.

In Tab. 6 sind die Kontrollfunktionsn des Steuerwerkes Contr. 2 dargestellt.

Selbstverständlich sind verschiedenartige Variationen der Steuerung und der Ausführung der Baugruppen möglich, um das gleiche Ergebnis zu erhalten. So könnten statt der Zähler Zl und Zr auch die gleichen Schaltungen Zl und Zr wie in Fig. 1 eingesetzt werden, falls das Akkumulatorschieberegister aus solchen Bauelementen besteht, an denen parallel abgegriffen werden kann. Weiterhin können die Schieberegister, insbesondere ACR auch durch einen Speicher mit einem Adreßzähler ersetzt werden, der modulo $m+2L+t$ erbeitet. Eine solche Ausführung mit weiteren Ergänzungen wird in Fig. 4 beschrieben.

Da die meiste Zeit für den Schiebevorgang und nicht den eigentlichen Summiervorgang benötigt wird, besteht eine vorteilhafte Weiterbildung darin, daß an dem Schieberegister ACR abschnittswelse Anzapfungen angebracht werden, so daß jeweils an dem Abschnitt, an dem die niedrigete zu summierende Stalle beim Verschieben dss Inhaltes des Akkumulatorspeichers ACR zuerst erscheint, sine Verkopplung zum Bummierwerk vorgenommen wird. Nach Verarbeitung aller Überträge wird dann das Schieben beendet. In einem Zähler wlrd dle tatsächliche Stellung des Inhalts im Akkumulatorspeicher mitgezählt und von dieser Stellung jeweils weltergerechnet. Das Schieberegister ACR selbst ist dazu als Ringapeicher geschlossen. Diese Methode ist insbesondere in den Zugriffssteuerungen von bekannten Magnetblasenspeichern angewendet worden.

Tritt eine Inversion des Inhaltes des Bummenspeichers auf, so erfolgt ein voller Umlauf bei/der nächsten Summierung mit der Inversionssteuerung. Auch die Zähler Zl und Zr werden zweckmäßig bei einem vollständigen Umlauf oder bei Rückführung des Schieberegisters ACR in eine Grundstellung gestellt.

Die beschriebenen Summierwerke mit abgekürzter serieller Verarbeitung benötigen mehr als 2,5 L Schritte zur Summenbildung. Eine wesentliche Beschleunigung des Summiervorganges bei nur relativ wenig Mehraufwand ermöglicht eine Schaltungsanordnung nach Fig. 3. Diese benötigt mehr als $0,5\,L + 5$ Schritte zur Summenbildung. Der Akkumulatorspeicher ACR let dabei in Worten der Längs L organleiert und das Summierwerk arbeitet über L Stellen parallel.

Der Mantissenspeicher B0, B1, B2 ist als Zweirichtungsschieberegister ausgebildet und zwar einerseits zur Ausrichtung der Mantisse über eine Länge L durch serielles Schieben mit Schiebeimpuls SHS entsprechend der unteren Stellen des Exponenten des Summenden, der in den Zähler Exl geladen wird,und andererseits zur L-stellig parallelen Verschiebung zum Summierwerkseingeng. Die Auswahl der zugehörigen Speicherabschnitte Li im Akkumulatorregister ACR geschieht über einen Adressendekoder Dac, der mit den oberen Stellen des Exponenten des Summenden, der in den Zähler Exn geepeichert wird. Li bedeutet i-tes Element von L1,..,Ln.

Die Bezeichnungen in Fig. 3 sind wieder entsprechend denjenigen zu Fig. 1 gewählt, soweit sie die gleichartigen Funktionen betreffen. Die neuen Zeichen sind in Tab. 5 erläutert. Die Busleitungen BI und BII sind von der Vielfalt L. Ebenso sind die parallelen Gatteranordnungen an den Einund Auegängen der Register, antsprechend deren Vielfalt. Die Mehrfachleitungen sind durch einen querstrich gekennzeichnet. Die Nullkontrollschaltung PZ ist L-stellig ausgeführt. Das Ausgangssignal dieser Schaltung wird vorteilhaft in Kennzeichenspeichern Zl bis Zn zu jedem Wort mitgespeichert. Es ist dann über ein Norgatter einfach möglich festzuetellen, wann der Speicher leer ist.

Das Summierwerk hat die entsprechenden Funktionen des in Fig. ld und le dargestellten und eine Transferfunktion T wie dee Seriensummierwerk. Der Übertrag wird von Wort zu Wort über eine Speicherstufe Cin zwischengespeichert. Die Inversion des Speicherinhalts wird durch Signal Ca bei Auftreten eines Übertrages Co bei Verarbeitung des höchstwertigen Wortes Ln, dessen Ansteuerung durch Signal En am Zähler Exn angezeigt wird, am Ausgang eines Gatters abgenommen und entsprechend dem früher Gesagten verarbeitet.

Das Steuerwerk Contr. 3 erzeugt jeweils auf Grund der Steuersignale vom übergeordneten Steuerwerk und der internen Signale die notwendigen Impulsserien zum Schieben und Zählen und Ansteuersignale für die verschiedenen Gatter der Schaltungsanordnung.

Der Summiervorgang geschieht nach folgendem Ablauf:

1. Die Mantisse wird mit zwei Schiebeimpulsen SHP in Register B1 und B2 übernommen.

2. Der Exponent wird mit Steuersignal TrE teilweise in Register Exl als Komplement und teilweise in Registers Exn übernommen.

3. Mit Schiebeimpuls SHS wird die Mantisse verschoben und die Zahl der Schritte als Signal CEI dem Zähleingang Ct vom Zähler Exl zugeführt bis dieser die Stellung L erreicht und Signal El abgibt, das auf das Steuerwerk einwirkt.

4. Das durch den Exponenten im Zähler Exn angesteuerte Wort Li wird zum Inhalt von Register Bo addiert und die Summe durch das Schreibsignal W in das Wort Li eingeschrieben.

5. Mit einem Impuls SHP und Zählimpuls CEn, der dem Zähler Exn zugeführt wird, und anschließendem Einschreiben durch Impuls W werden in zwei weiteren Zyklen die weiteren Teilsummierungen durchgeführt. Soweit noch ein Übertrag auftritt, folgen weitere Zyklen bis zum höchstwertigen Wort, das durch Ausgangssignal En des Zählers Exn angezeigt wird, maximal.

6. Bei Auftreten einer Inversion wird der gesamte Speicher fortlaufend über den Zähler Exn adressiert und invertiert zurückgeschrieben.

Zur Durchführung der Rundungsoperation kann prinzipiell dem Schema nach Tab. 2 gefolgt werden. Dazu werden i. e. folgende Schritte ausgeführt:

1. Die Summe mit dem niedrigsten Wort beginnendwird mit Steuersignal GMs auf aus BII und von dort über Bus BI fortlaufend parallel in Register B2, BI, Bo hineingeschoben, bis Speicher ACR über Signal Z leer angezeigt wird.

2. Durch Serienschiebeimpulse SHS wird die Summe solange verschoben,bis Register B2 leer durch Signal B2Z angezeigt wird. Die ungerundete Mantisse steht dann in Register BI und der Rest in Registar Bo. Die Schritte werden in Zähler Exl mitgezählt.

3. Der Rest wird in das leere Speicherwort in den Speicher ACR addiert und nochmals zum Rest aufaddiert und ggf. ein Übertrag im nächsten Schritt nach Verschieben mit einem Schiebeimpuls SHP verarbeitet und die gerundete Mantisse in den Speicher ACR eingeschrieben.

4.1. Sofern dann ein Übertrag Co auftritt, hat die Mantisse ihren Höchstwert. Da die darüberliegenden Stellen Null sind, wird die Mantisse um eine Stelle mit Schiebeimpuls SHS nach unten geschoben.

4.2. Sofern kein Übertrag Co dann auftritt, wird im Zähler Exl weitergezählt. Falls im Zähler Exl dann ein Übertrag auftritt, wird auch in Zähler Exn gesteuert durch Signal Rdl weitergezählt. Die Mantisse wird in den Summenspeicher ACR übertragen.

5. Die Mantisse der Summe wird auf Bus BII ausgegeben.

6. Der Exponent der Summe wird mit Steuersignal GEs in den unteren Stellen aus dem Zähler Exl und in den oberen Stellen als Komplement aus Zähler Exn auf den Informationsbus BII gegeben.

Das Steuarwerk Contr. 3 ist in bekanntar Weise durch eina Ablaufsteuerung aus Zählern mit drei und n Stellungen und einer Logiktabelle der Zustandsgrößen ausgeführt. Die Zusammenhänge ergeben sich aus obiger Beschreibung.

Variationen der Schaltungsanordnung durch äquivalente Baugruppen sind z.B. dadurch möglich, daß die Nullabfühlung an Register B2 über eine Steuerung des Summiarwerkes auf die Prüfschaltung Pz übertragen werden kann. Auch kann dis parallele Schiebung in den B-Registern durch eine Multiplexeransteuerung entsprechend dem Speicher ACR ersetzt werden, oder der Speicher ACR kann durch eine parallel verschiebbare Registeranordnung in Ringform ersetzt werden. Das Verschieben in die Stellung zur Summation nach Maßgabe des Exponentenanteils in Register Exn kann dann überlappend mit dem Verschieben der Mantisse in den B-Registern erfolgen, um Zeit einzusparen.

Eine Beschleunigung läßt sich bei Verlängerung des Summierwerkes auf zwei oder drei Wortlängen erreichen Da aber im Mittel um 0,5 L Stellen geschoben werden muß, lohnt sich dieser Aufwand nur, wenn vergleichsweise zur Summation das Schieben z.B. durch ein bekanntes Schiebewerk beschleunigt wird.

Alle verkürzten Rechenwerke hsben gemeinssm den Nachteil, daß bei Vorzeichenumkehr der Summe und bei Auftreten vieler Überträge die Operationszeit zur Abarbeitung der Überträge bzw. zur Inversion des Speicherinhalts verlängert wird.

Beispielsweise zeigt die Addition von $c_1 = b^{60}$ und $c_2 = -b^{-60}$ daß Überträge (oder Borgen) über viele Ziffern auftreten kann. Es kann sich daher empfehlen, ststt eines langen Speichers (Akkumulators oder Schieberegisters) zwei solcher Einheiten vorzusehen, positive und negative Summanden zunächst getrennt aufzusummieren und erst zum Schluß die Ergebnisse beider Summationsprozesse von einander abzuziehen

Ein solches Vorgehen erfordert im Prinzip Verkehrungen zur Bildung der Differenz zweier langer Akkumulstoren (Schieberegister oder Speicher). Bei dieser Subtrsktion kann nstürlich Auslöschung suftreten Dieser Subtraktionsprozess kann sich vereinfschen, wenn man berücksichtigt, daß man, um das Endergebnis zu erhalten, gar nicht die exakte Differenz der beiden langen Register benötigt, sodern nur die ersten $L + 1$ signifikanten Ziffern und ein weiteres Merkbit, welches darüber Auskunft gibt, ob dahinter noch eine weitere von Null verschiedane Ziffer folgt oder nicht. Die $(L+I)$-te Ziffer reicht aus beispielsweise zur AusfOhrung einer Rundung zur nächst gelegenen Zshl, das Merkbit zur AusfOhrung der Rundungen $\nabla$ und $\triangle$.

Die zum Schluß anfallende Subtraktion der beiden langen Akkumulatoren (Schieberegister oder Speicher kann sich vereinfachen, wenn man während der Summation jeweils in jedem Register zwei Zeiger Zl und Zr mitfOhrt, welche auf die erste bzw. letzte von Null verschiedene Ziffer der beiden langen Akkumulatoren (Schieberegister oder Speicher) zeigt. Die Zeiger Zl, welche auf die jeweils ersten von Null verschiedenen Ziffern zeigen, erlauben eine rasche Berechnung des Vorzeichens der Differenz. Die Zeiger Zr, welche auf die letzten beiden von Null verschiedenen Ziffern zeigen, ermöglichen eine einfache Bestimmung des Merkbits.

Eine geeignete Schaltungsanordnung mit zwei Akkumulatorspeichern ACR1 und ACR2 zeigt Fig. 4. Die Stauerung ist entsprechend den bereits dargestellten aufgebaut. Die Vereinfachung besteht darin, daß abhang g vom Vorzeichen der Mantisse des Summanden mit dem senen oder anderen Speicher gearbeitet wird. wie aus der Figur ersichtlich ist. Eine Inversion bei der Subtraktion der beiden Teilsummen wird durch die Steuerung der Zeiger Zl1, Zl2 verhindsrt. Deshalb wird das Ergebnis in normaler Form ausgegeben.

Ein wesentlicher Vorteil der hier gezeigten Summierwerke besteht darin, daß der ganze Summationsvorgang mit einem abgeschlossenen, räumlich beispielsweise bei dem Summierwerk und dem Obergeordneten Rechenwerk untergebrachten Speicher mit begrenztem und vor allem von der Dimension n der Vektoren a und b (bzw. der Anzahl n der Summanden $c_i$) unabhängigen Speicher ohne Benutzung dss Hauptspeichers der Rechenanlage abgewickelt werden kann. Auf diesen lokalen Speicher kann i.a. über wesentlich kürzere Weglängen und damit schneller zugegriffen werden als auf den Hauptspeicher der Rechenanlage.

Führt man die en den Skalarprodukten auftretenden Multeplikateonen mettels Veelfachen-Tabellen aus (dees hängt natürlech von der Wahl der Basis b ab), so könnte man daran denken, gleech dee Veelfachen des einen Multiplikanden en den langen Akkumulator (Schieberegester oder Speecher) zu addieren. Dia Anzahl dsr auszuführenden Addeteonan wächst dadurch von n auf L. n. Die Längs dsr einzelnen Summanden reduziert sich hingegen auf L +1 Ziffern der Bases b. Dieee Addetionan könnte man in jedem Falle mit einem Summeerwerk bzw. Schieberegister der Länge 2L und einigen zusätzlechen Ziffern für dan Übertrag baquem erledigen.

Ein solches Vorgehen dürfte sech i.a. aber nicht empfehlen, da die Addetion in den langen Speicher relatev kompliziert ist verglechen mit den bsi einsr Multiplekateon anfallenden Addetionen. (alle Summanden haben gleiches Vorzeichen, send von kurzer Länge und haben nur geringen Exponentenunterschied), Ein Überlauf kann nicht auftreten.

Es empfiehlt sich hingegen, die zur Beldung dar Produkte notwendigen Additeonen gleich mit einem Akkumulator der Länge 3L auszuführen. Das fsrtiga Produkt kann dann anschließend gleich für dis folgende Addition zu einem Ausschnett des langen Speichers der Größe des Exponenten entsprechend positioniert werden. Dieser Akkumulator könnte das B-Register sein, und das Summierwerk könnte für dis Addition der Teilergebnisse der Multiplikation mitbenutzt werden.

Eine Weiterbildung der Schaltungsanordnung nach der Erfindung besteht darin, daß des Exponentenregister Ex direkt zur Summierung der Exponenten der beiden Exponenten der Faktoren benutzt wird. Diese Addition der Exponenten kann dann zeitlich parallel zur Multiplikation dar Mantissen und Addition der Teilprodukte erfolgen. Für die Addition kann entweder die Zählfunktion des Exponentenregieters Ex genutzt werden oder es kann ein seriell arbeitender Addierer vorgeschaltet werden, wenn das Register als Schieberegister aufgebaut ist.

Bei der gezeigten Verwendung des langen Akkumulatorspeichers mußte vor jeder Summation der Inhalt gelöscht werden durch Steuersignal CIA. Es gibt aber auch andere Anwendungen, z.B. die Errechnung von Skalarprodukten, bei denen zweckmäßig mehrere lange Summen gebildet werden. In diesen Fällen wird am Anfang nicht auf Null gesetzt, sondern es wird weiter auf den Inhalt aufaddiert. Mit dieser Variante des Skalarproduktes bzw. der Summe lassen sich dann auch Ausdrücke der Form $\square$ (AB + CD) mit Matrizen A,B,C,D, welche beispielsweise bei der Multiplikation von Blockmatrizen auftreten, im Sinne (I) korrekt ausführen. Ohne diese Variante müßte man durch Umspeichern die Matrizen A,B,C,D zunächst in die Gestalt

$$(A\ C)\begin{pmatrix} B \\ D \end{pmatrix}$$

überführen.

Es ist weiterhin such vorteilhaft, wenn für Sonderfälle eine Erweiterung der Steuerung dahingehend vorgesehen wird, daß gebildete Summen vollständig weggespeichert und wieder zugeführt werden können.

Durch eine Erweiterung der Steuerung kann das Summierwerk sowohl zur Ausführung von Skalarprodukten mit optimaler Genauigkeit als auch zur Durchführung einfacher Gleitkommaoperationen +,-,•,/ nach den Formeln (RG), (R1,2,3) und ggf. (R4) verwendungafähig gemacht werden. Algorithmen zur Ausführung dieser Operationen sind in *(1) und *(2) angegeben.

In Fig. 4 ist eine Schaltungsanordnung dargestellt, bei der zwei Akkumulatorapeicher ACRI und ACR2 verwandt werden. Dieae sind als Speicher organisiert, der mit einem Adreßregister D2 über Dekoder DD angesteuert wird, wie bereits weiter oben erwähnt. Welches der beiden Register auf daa Summierwerk ALU geschaltet wird, wird durch das Vorzeichen der Mantisse des Summanden Vm oder, bei Bildung der Endsumme, durch die Lage der höchsten vorschiedenen Stelle in Speicher ACRI oder ACR2 mittels der Flipflopschaltung Vs und der vorgeschalteten Gatter bestimmt, aus denen das Steuersignal U gebildet wird, das die Multiplexer MPI und MP2 steuert, die parallel oder gekreuzt durchschalten.

Weiterhin ist die Ausführung der Multiplikation der Multiplikanden A und B durch eine Erweiterung des Steuerwerkes Contr 4 gegenüber den bisher gezeigten Steuerwerken und eine Vielfachentabelle Vt vorgesehen.

Die Schaltzeichen sind sinngemäß den bisher verwandten gewählt und, soweit sie neu sind, in Tabelle 6 zusammengestellt.

Parallel zu dem Akkumulatorspeicher ACR wird zweckmäßig ein weiterer Speicher ACP von einer Länge 3 L für die Aufnahme der Mantisse des Produkts vorgesehen, dem ein Addierwerk AD vorgeschaltet ist, das die Teilprodukte addiert. Die errechnete Mantisse kann daraus mit dem Steuersignal GPs abgerufen werden.

Die Multiplikanden werden auf Büs SI vom übergeordneten Rechenwerk bereitgestellt. Als erstes werden die Exponenten der Multiplikanden im Register RmA und Rmt durch die Impulse TrEmA und TrEb übertragen. Durch Steuersignale VE, SHRA, SHM und SHD werden die Exponenten über das Summierwerk ALU addiert und in Register D1 übertragen.

Dann werden die Mantissen der Multiplikanden in die Register RmA und RmS durch Steuersignale TrEmA, TrmB vom Bus BI übernommen. Bei ungleichem Vorzeichen Va,Vb der Mantissen wird außerdem Flipflop Vm gegetzt, das bestimmt, in welchen Speicher addiert werden soll.

Die Mantisse des Multiplikanden A wird dann wiederholt zum Inhalt des Registers Rmt addiert, und die so gebildeten Vielfachen werden in der Vielfachentabelle Vt fortlaufend mit Steuersignal Wv eingeschrieben. Die Steuerung erfolgt über die Signale VE, SHRA, SHM und den Adreßfortschaltimpuls Ct8 bis der Zähler CB Stellung b erreicht hat.

Durch den Schiebeimpuls SHm8 werden dann die einzelnen Stellen des Multiplikanden 8 in das Adreßregister C8 übertragen. Sie steuern die Übernahme des adressierten Tabellenspeichers Vt in das Register Rmt an, dessen Inhalt dann über Schiebeimpulse SHM dem Summierwerk ALU mit Gattersignal A zugeführt wird. Mit Übernehmesignal TrD2 wird der Exponent in Zähler D2 übertragen. Dann wird, beginnend mit der durch den Exponenten angewählten Stelle, die Teilsumme dem anderen Eingang des Summierwerkes zugeführt, wobei eine Fortschaltung des Zählers D2 mit Signal Cd2 parallel zur Schiebung des Registerinhalts Rmt erfolgt. Nach 2 L Schritten wird die Weiterschaltung das Zählers D2 solange fortgeführt, wie Überträge Co auftreten.

Mit dem weiteren Schieber. in Register RmB wird der Exponent in Zähler D1 mit Zählimpuls Cdl um eins erhöht und dann nach Zähler D2 übertragen. Dann erfolgt die nächste Summierung. Diese Folgen wiederholen sich L mal, bis Register RmB leer ist. Entsprechend werden dann weitere Pro: dukte gebildet und summiert.

Wenn das Ergebnis durch Anforderung vom übergeordneten Rechenwerk ausgegeben werden soll, wird der Zähler D2 bis in Endstellung d durchgezählt, und sämtliche weiteren Stellen in den Speichern ACRI und ACR 2 auf Ungleichheit geprüft und dadurch das Signal Dif erzeugt und damit abhängig von der höchsten ungleichen Stelle das Vorzeichenflipflop Vs gesetzt.

Außerdem wird bei jeder Ungleichheit über das Steuerwerk das Steuersignal TrDI erzeugt, mit dem das Komplement der Adresse aus Zähler D2 nach Zähler DI übertragen wird.

Abhängig von der Stellung des Flipflops Vs wird, mit Steuersignal U und durch Steuersignal Sub gesteuert, die Subtraktion der Speicherinhalte von ACRI und ACR2 ausgeführt. Bei der Subtraktion wird in Zählern DI und D2 mitgezählt, bis das Endsignal d2 an Zähler D2 auftritt, d.h., bis die höchste ungleiche Stelle erreicht ist. Alle höheren Stellen würden sich bei einer weiterlaufenden Subtraktion zu Null aufheben und können unberücksichtigt bleiben.

Da aber auch in dem Ergebnis noch weitere linke Stellen Null sein können, wird in einem weiteren Register Zl jeweils miteinem Ergebnissignal Si der jeweilige Adreßstand eingeschrieben, der von dort als Exponent des Ergebnisses abgerufen werden kann.

Im übrigen ist ein Register Zr und eine entsprechende Beschaltung wie in Fig. 2 für die Ermittlung der letzten rechten von Null verschiedenen Ziffer vorgesehen.

Durch die in oben gezeigter Weise erzeugten Steuergrößen Oc, UF, OF und Z kann dann in entsprechender Weise die Rundung und Ausgabe des Ergebnisses und des Exponenten gesteuert werden.

Fig. 4 zeigt somit ein kombiniertes Rechenwerk, das die Multiplikation, die Summierung und die Rundung ausführt und dabei Ergebnisse maximal erreichbarer Genauigkeit liefert, ohne daß Zeit durch Umspeicherungen und Adreßrech-nungen verloren geht.

Das gezeigte Beispiel ist stellvertretend für eine ganze Klasse von möglichen Varianten je nach Art der gewählten Zahlendarstellung und Ausgestaltung der Register, Zähler, Speicher und des Steuerwerkes sowie der Parallelität der Datenwege und -busse. Es sind verschiedene Kombinationen der Funktionsgruppen in den gezeigten Beispielen möglich, wobei allerdings viele davon auf Grund der ungünstigen Relation zwischen Aufwand und Geschwindigkeit praktisch ungeeignet sind, den gewünschten Effekt der maximalen Genauigkeit aber erbringen.

In Fig. 4 kann beispielsweise die Steuerung so geändert werden, daß erst das vollständige Produkt gebildet wird und dann eine Summierung erfolgt. Es kann dadurch das Addierwerk AD erübrigt werden; dafür erhöht sich der Aufwand für die Steuerung, und der Zeitbedarf für die Summierung entsteht zusätzlich.

Weiterbildungen der Erfindung sind insbesondere in der Angabe der Lösungen zu sehen, in denen am Beispiel der Fig. 3 eine Optimierung der Schaltungsanordnung bezüglich Aufwand und Geschwindigkeit dargestellt ist und in denen am Beispiel der Fig. 4 eine Integration von Multiplizierwerk und Summierwerk aufgezeigt ist.

Weiterhin stellt die angegebene Kombination eines optimierten Summierwerkes nach Fig. 3 und der integrierten Anordnung nach Fig. 4 ebenfalls eine Weiterbildung der Erfindung dar, da mit einer solchen kombinierten Anordnung sowohl die Geschwindigkeit der Summierung als auch der Multiplikation für sich als auch deren Folge beschleunigt wird, da Zwischenübertragungen der Daten entfallen, und sich außerdem eine Einsparung an Bauteilen ergibt.

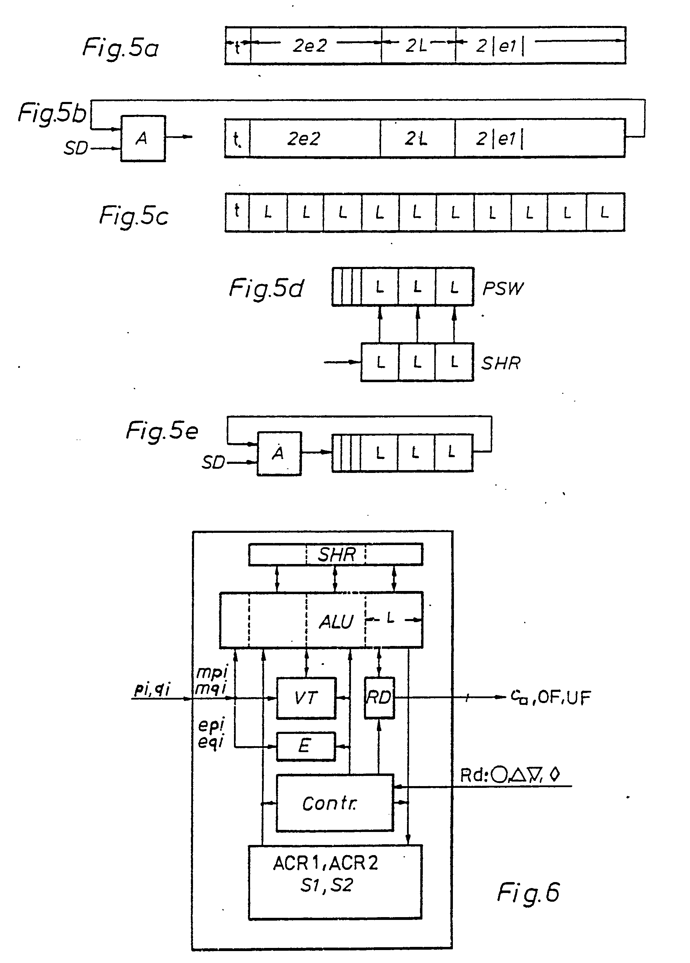

Zum besseren Verständnis sind in Fig. 5 verschiedene Grundlösungen zusammengestellt.

Fig. 5a stellt schematisch ein Summierwerk dar, das so lang ist, daß alle Summanden ohne Informationsverlust aufsummiert werden können. In einem Register der Länge $2e2 + 2L + 2|e1|$ kann man zunächst alle Summanden stellenmäßig korrekt ohne Exponenten in Festkommadarstellung darstellen. Um auch bei der Addition eventuell auftretende Überträge auffangen zu können, sind links noch einige (t) weitere Ziffern der Basis b des verwendeten Zahlensystems hinzugefügt. Es kann dann jede Summe (II) von n Summanden ohne Informationsverlust, d.h.,korrekt in dem langen Parallelsummierer ausgewertet werden. Dabei können sogar $b t + 1$ Überträge auftreten und ohne Informationsverlust verarbeitet werden.

An Hand von drei typischen Beispielen illustrieren wir die Länge dieses Parallelsummierwerkes:

a) Es sei $b = 10$, $t = 3$, $L = 8$, $e1 = -30$ und $e2 = 30$.

Dann erhält man für das Parallelsummierwerk eine Länge von $t + 2e2r2L + 2|e1| = 142$ Dezimalziffern. Bei BCD-Codierung sind dies 568 bit oder 71 Byte.

b) Es sei $b = 16$, $t = 4$, $L = 14$, $e1 = -72$ und $e2 = 72$.

Dann erhält man eine Länge von $t + 2e2 + 2L + 2|e1| = 320$ Hexadezimalziffern. Das sind 1280 bit oder 160 Byte.

c) Es sei $b = 10$, $t = 4$, $L = 13$, $e1 = -99$ und $e2 = 99$.

In diesem Falle erhält man für das Summierwerk eine Länge von $t + 2e2 + 2L + 2|e1| = 426$ Dezimalziffern. Bei BCD-Codierung sind dies 1704 bit oder 213 Byte.

Fig. 5b zeigt ein Serialsummierwerk A, das mit einem dem obengenannten entsprechend langen Register zusammenarbeitet, das in der Lage ist, zwei Ziffern der Basis b mit geeigneter Übertragsbehandlung zu addieren.

Bei jeder Addition eines Summanden wird der Inhalt des Schieberegisters von rechts auf einen Eingang des Addierers geführt. An geeigneter, durch den Exponenten des Summanden bestimmten Stelle wird der nächste Summand auf den zweiten Eingang gelegt und hinzuaddisrt.

Zwischen diesen zu Fig. 5a und 5b skizzierten Extremfällen liegen mannigfache Zwischenlösungen, von denen wir jetzt einigs angeben.

In den Fällen 5a und 5b wird über sehr viele Ziffern addiert, in denen der 2. Summand gar nicht besetzt ist. Im folgenden sind deshalb Lösungen gezeigt, bei denen die Addition daher im wesentlichen auf die Ziffern des 2. Summanden beschränkt ist und die restlichen Ziffern der Summe nur in einem Speicher gehalten werden. Wir verwenden daher hier einen Akkumulatorspeicher der Länge wie unter Fig. 5a und 5b.

Fig. 5c zeigt einen Speicher, der in Worte der Länge L eingeteilt ist. Da die einzelnen Summanden von der Länge 2L sind, passen sie stellenmäßig jedenfalls auf einen Teilabschnitt des Speichers der Länge 3L. Dieser Abschnitt des langen Speichers wird durch den Exponentsn des Summanden bestimmt. Er wird herausgegriffen und in einen Parellelsummiarer PSW Fig. 5d der Länge 3L geführt. Der zu addierende Summand wird in ein Schieberegister SHR gleicher Länge gegeben, dort dem Exponenten entsprechend positioniert und in den Summierer addiert.

Bei dieser Addition kann ein Übertrag auftreten. Um diesen gleich ohne viel Steuer- und Zeitaufwand aufzufangen, kann man zweckmäßig aus dem langen Akkumulatorspeicher links einige Ziffern mehr als die 3 Worte in einen links entsprechend verlängerten Akkumulator auslesen. Sind nicht alle diese Ziffern gleich b-1, so wird ein bei der Additinn entstehender Ubertrag von diesen zusätzlichen Ziffern aufgefangen. Da der Fall, daß alle Ziffern b-1 sind, nicht auszuschließen ist, ist außerdem eine Schleifensteusrung vorgesehen, welche den Übertrag ggf. auf die nächsten Ziffern des langen Akkumulatorspeichers addiert. Disse Schleifensteuerung muß eventuell mehrmals aktiviert werden.

Fig. 5e zeigt einen Fall mit einem Speicher nach Fig. 5c und einem abgekürzten seriell arbeitenden Summierwerk; wobei der neue Summand dem Exponenten entsprechend an die richtige Stelle hinzuaddiert wird.

Auch hier sind Vorkehrungen für die Behandlung eines eventusll weiter laufenden Übertrages getroffen.

In allen anhand von Fig. 5 dargestellten Fällen wird nach Aufsummierung der n Produkte $c_i$ das Ergebnis noch auf L Stellen gerundet. Zur Ausführung einer Rundung zur nächstgelegenen Zahl des Rasters reicht es dabei aus, die (L+l)-te Stelle der Summe zu bestimmen. Zur raschen Auffindung der ersten L bzw. L + 1 Stellen des Summationsergebnisses ist es zweckmäßig, während der Summation einen Zeigsr mitzuführen, welcher stets auf die von links her gesehen erste von Null verschiedene Ziffer der Summe angibt.

Zur korrekten Ausführung der Rundungen $\nabla$ und $\triangle$ wird ermittelt, ob nach der L-ten Stelle noch etwas von Null verschiedenes steht oder nicht. Das Abfragen dieser Informaticn wird zweckmäßig vorgenommen, indem während des Summationsprozesses ein weiterer Zeiger mitgeführt wird, welcher stets die letzte von Null verschiedene Ziffer der Summe angibt. Eine Auswertung dieses Zeigers führt dann zu einer raschen Ausführung der Rundungen $\nabla$ und $\triangle$.

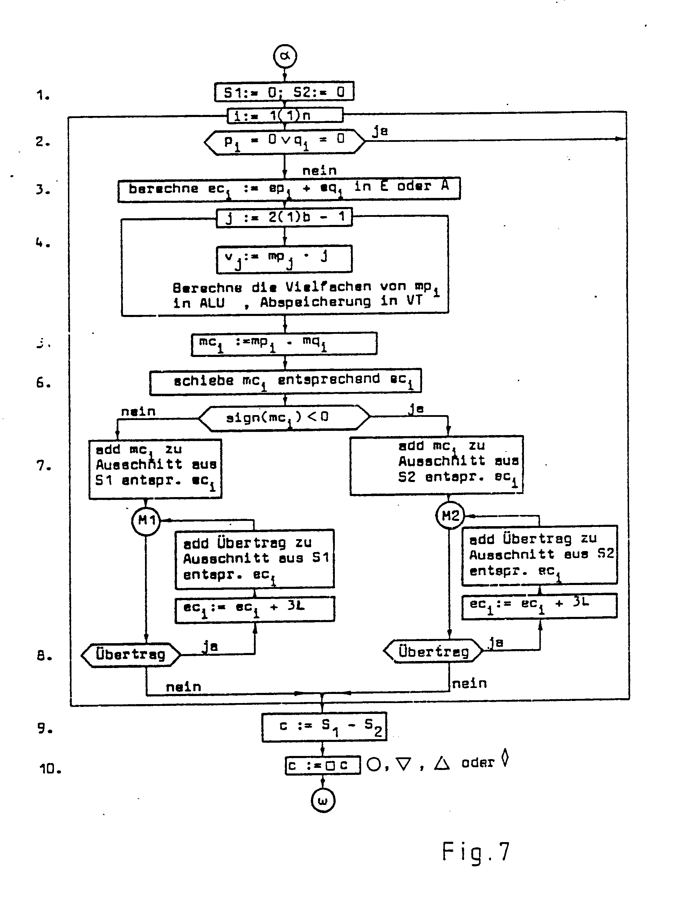

Für den allgemeinen Fall des integrierten Rechsnwerkes für die Ausführung der Multiplikationen und Summierungen ist in Fig. 6 ein Blockschaltbild gezeigt und in Fig. 7 ein Flußdiagramm der Steuerung dargestellt, in dem die wesentlichan Funktionen enthalten sind, wobsi die Ausführung mit zwei Summenspeichern vorausgesetzt wird.

Zu berachnen ist die Summe

$$c = \Box \sum_{i=1}^{n} p_i \cdot q_i = \Box \sum_{i=1}^{n} c_i \quad \text{mit } c_i := p_i \cdot q_i.$$

$c_i$ mit $c_i := p_i \cdot q_i$.

Dabei sind $p_i$, $q_i \varepsilon S(b,L,e1,e2)$, $c_i \varepsilon S(b,2L,2e1-1,2e2)$ und $\Box \varepsilon \{\bigcirc, \nabla, \triangle, \Diamond\}$.

Der allgemeine Fall b > 2 ist zugelassen. Die Multiplikation wird mittels Vielfachen-Tabellan Vt des einen Operanden ausgeführt.

Die Mantissen der Gleitkommazahlen $p_i$, $q_i$ und $c_i$ sind mit $mp_1$, $mq_i$ und $mc_i$, die Exponenten mit $ep_i$, $aq_i$ und $ec_i$ und die Teilsummen mit S1 und S2 bezeichnet. In dem Strukturdiagramm Tab. 7 bezsichnen wie Oblich Rechtacke: Anweisungen, Kreise: Marken, sechseckige Gebilde: Badingungen. Die zu einer Laufanweisung gehörenden Anweisungan sind nach der Laufangabe eingerahmt.

In der Darstellung Fig. 6 ist das Rechenwerk ALU und das Register SHR, das beispielsweise ein Schieberegister ist von der Länge 3 L mit einigen Überlaufstellen. Die Exponenten werden im Exponentenaddierer E zusammengeführt. Die vollständigen Teilsummen werden im Speicher ACR1, ACR2 aufgenommen. Über das Rundungswerk RD wird das endgültige Ergebnis an die übergsordnete Schaltung ausgegeben.

Die einzelnen Schritte des in Fig. 7 dargestellten Ablaufs sind folgende:

1. Die langen Speicher S1 und S2 werden Null gesetzt.

2. Wenn eine der beiden Vektorkomponenten $p_i$ oder $q_i$ Null ist, findet keine Summation statt.

14

3. Berechnung des Exponenten des Produktes $p_i \cdot q_i$ in einem Exponentenaddierwerk oder in ALU. Im letzteren Falle wird das Ergebnis in einem Exponentenregister abgesetzt und aufbewahrt.

4. Berechnung der Vielfachen des einen Multiplikanden. Die Vielfachen werden in einer eigenen Vielfachen-Tabelle abgesetzt. Im Falle des Dualsystems entfällt dieser Schritt. Bei anderen Multiplikationsverfahren ist er durch andere Schritte zu ersetzen.

5. Berechnung des Produktes der Mantissen von $p_i$ und $q_i$.

6. $mc_i$ wird entsprechend $ec_i$ auf einen Ausschnitt der Länge 3 L des langen Speichers zurechtgeschoben.

7. Positive Summanden werden zu SI, negative zu S2 addiert.

8. Übertragsprüfung und Übertragsbehandlung.

9. Bildung der Differenz der beiden langen Speicher.

10. Rundung des Ergebnisses auf Länge L mittels $\bigcirc, \triangledown, \triangle$ oder $\lozenge$. Der im Blockschaltbild eingetragene Runder ist u.U. nur eine Vorrichtung zur Führung eines Merkbits oder des rechten Zeigers.

Es wurde oben schon erwähnt, daß es zweckmäßig ist, eine Variante des Skalarproduktes bereitzustellen, bei der der Schritt 1., d.h. das Nullsetzen der beiden Speicher ACR1, ACR2 am Anfang übersprungen wird.

Die Schritte 2. bis 5. beschreiben die Multiplikation der Mantissen $mp_i \cdot mq_i$. Die Schritte 6. bis 8. die Addition von mci an die durch eci bestimmten Stellen von SI bzw. S2.

Im Schritt 9. wird die Differenz der beiden langen Speicher gebildat.

In einer bevorzugten Ausführung werden in dem ganzen Ablauf einige unabhängige Operationen so gesteuert, daß sie parallel ablaufen. Für die Skalarproduktbildung geschieht dies z.B. nach folgendem Schema, wobei parallele Vorgänge nebeneinander stehen:

$s := 0$; $ec_1 := ep_1 + eq_1$; $mc_1 := mp_2 . mq_1$;
$s := s + c_1$; $ec_2 := ep_2 + eq_2$; $= mp_2 . mq_2$; .....
$s := s + c_{n-1}$; $ec_n := ep_n + eq_n$, $mc_n := mp_n . mq_n$;
$s := s + c_n$

Im allgemeinen dauert der Multiplikationsprozeß erheblich länger als die beiden Additionsprozesse, ao daß die dadurch arzielta Beschleunigung relativ gering ist.

Eine weitere bevorzugte Ausführungsform ist dadurch gegeben, daß mehrers parallelarbeitende Multiplikatorwerke vorgesehen werden, die ein Summier- und Rundungswerk mit Summanden versorgen, wobei die Zahl der Multiplikatorwerke maximal so groß gewählt wird, daß das Summier- und Rundungswerk zeitlich ausgelastet ist.

Eine weitere Beschleunigung läßt sich dadurch erzielen, daß man mehrere Summierwerke abschnittsweise an einem Skalarprodukt arbeiten läßt und erst nach Vorliegen der Ergebnisse die gebildeten Teilsumman aufaddiert und rundet.

Da in der Numerischen Analysis nur selten einzelne Skalarprodukte arrechnet werden müssen, is es zweckmäßig in Großrochnern mehrere Skalarproduktbildner vorzusehen, so daß gleichzeitig in einem Programm angeforderte Skalarprodukte gleichzeitig und unabhängig voneinander errechnet werden. Dies beschleunigt den Rechner erheblich.

Die Erfindung findet auch Anwendung bei Produkten aus drei oder mehr Faktoren, die in einem entsprechend großen Summierwerk und Akkumulatorregister summiert werden ohne zwischenzeitliche Rundung. Am Beispiel von Dreifachprodukten sei dies kurz erläutert.

Der Akkumulator ACR,ACR1,ACR2 hat eine Länge von $3e2 + 3L + 3|e1| + t$ Stellen.

Das Register B hat eine Länge von 3L Stellen. Der Tabellenspeicher Vt in Fig. 4 hat Register von der Länge 2L Stellen. Das Summierwerk in Fig. 6 hat eine Länge von mehr als 4L Stellen.

Die Zähler zur Aufnahme der Exponenten und zur Frzeugung von Steuersignalen haben eine Kapazität, die der aufzunehmenden Größe bzw. der gesteuerten Registerlänge entspricht. Die Größe m, die zur Beschreibung der Gatter dient, ergibt sich entsprechend zu $m = 3|e1| + 3e2$.

Bei n-fach Produkten sind die Größen entsprechend zu verändern.

Es ist zweckmäßig, bsi solchen mehrfach langsn Akkumulatoren und Registern vorzusehen, daß sie durch Umschaltgatter auf eine bestimmte effektive Länge jeweils eingestellt werden. Außerdem werden die Zähler auf eine entsprechende Kapazität jeweils voreingestellt. Die Steuerung arfolgt von dem übergeordneten Rechner über ein Register und einen Decoder, der die Gatter des entsprechenden Registerabschnittes und die zugehörige Vorwahl einstellt. Dadurch wird im Fall der Verarbeitung von Produkten aus wenigen Faktoren keine unnötige Zeit durch die Bearbeitung eines unnötig langen Registers verbraucht.

## Tab. 1

Liste der verwendeten Symbole und Zeichen:

$\mathbb{R}$        Menge der reellen Zahlen

$\mathbb{N}$        Menge der natürlichen Zahlen $\mathbb{N} = \{1,2,3,4,\ldots\}$

$a \in M$        a ist Element aus der Menge M

$\bigwedge\limits_{a,b \in M}$        lies: für alle $a,b \in M$

$:=$        definierendes Gleichheitszeichen. Der Ausdruck auf der Seite des Doppelpunktes ist per Definition gleich demjenigen auf der Seite des Gleichheitszeichens.

$\sum\limits_{i=1}^{n} c_i$        $= c_1 + c_2 + c_3 + \ldots + c_n$

$\bigcirc$        Rundung zur nächstgelegenen Zahl       $\mathbb{R}$

$\bigtriangledown$        Rundung nach unten       $\mathbb{R}$

$\bigtriangleup$        Rundung nach oben       $\mathbb{R}$

$\Diamond$        Rundung nach innen       $\mathbb{R}$

$\square$        allgemeiner Rundungsoperator $\square \in \{\bigcirc, \bigtriangledown, \bigtriangleup, \Diamond\}$

$S(b,L,e1,e2)$        Gleitkommasystem zur Basis b, L Ziffern in der Mantisse, kleinster Exponent e1, größter Exponent e2

$i = 1(1)n$        i läuft von 1 in Schritten von 1 bis n.

$T^n$        Produktmenge; Die Menge aller n-tupel $(a_1,a_2,\ldots,a_n)$ mit $a_i \in T$ für alle $i = 1(1)n$.

## Tab. 2

| | | |
|---|---|---|
| 1. | ClA | Lösche Akkumulator |
| 2a | ClB, ClE, ClV | Lösche, Lade aus Speicher Summand |
| 2b | TrB, TrE, TrV ∣ Sp→BI | |
| 3. | TrA | Summiere |
| 4. | GMs, GCs, GEs ∣ BII→Sp | Übernimm Summe in Speicher Sp |
| 5. | OF, UF ?   bei Über- und Unterlauf | setze Merker OF bzw. UF |
| 6. | Oc ? Z ?   kein Rest | |
| 7a | ClB, ClE, ClV | |
| 7b | BII→BI ∣ TrB, TrE, TrV | |
| 8. | Sp (Subtr.), TrA | Bilde Rest |
| 9a | ClB, ClE, ClV | |
| 9b | BII→BI ∣ TrB, TrE, TrV | |
| 10. | TrA | Verdoppele Rest |
| 11a | ClB, ClE, ClV | |
| 11b | Sp →BI ∣ TrB, TrE, TrV | |
| 12. | TrA | Runde Summe |
| 13. | OF ?   bei Überlauf | setze Merker OF |
| 14. | GMs, GCs, GEs ∣ BII→Sp | |

Ende

**Tab. 3a**

| | | |
|---|---|---|
| ACR | = | Akkumulatorregister |
| ClA | = | Akkuregister-Löschen |
| TrA | = | Übernehmen in Akku aus ALU |
| | | und " Ca " " |
| Ca | = | Übertrag aus Summierwerk |
| Cs | = | Speicherstelle für Vorzeichen der Summe; Zählflipflop |
| ALU | = | Summierwerk (+,-,Invertiere) , |
| BI,BII | = | Informations Busse |
| ClV | = | Lösche Mantissenvorzeichen |
| TrV | = | Übernehme Mantissenvorzeichen |
| ClE | = | Lösche Exponent |
| TrE | = | Übernehme Exponent |
| B | = | Mantisse Summand (B) Register |
| ClB | = | Lösche B |
| TrB | = | Übernehme B |
| Dec 1 | = | Dekoder Exponent und Vorzeichen |
| Ok,i,r | = | Oder-Gatter ("wired or") zum Eingang ALU |
| Uk,j,r | = | Und-Gatter für Signale B und DecE |
| Ai | = | Stellen i vom ACR Ausgänge |
| Si | = | Stellen i vom ALU (zum Eingang ACR) |
| TA | = | Überlaufspeicher in ACR |
| ALC | = | Steuerung ALU-Operationen |
| Vm | = | Mantissenvorzeichen |
| GC | = | Summenvorzeichen (Cs) (tri-state-Gatter) |
| GCs | = | Steuersignal GC auf Bus BII |
| Zl | = | Nullabfühlung von links nach rechts |
| Zr | = | Nullabfühlung von rechts nach links |
| Us,j,i,r | = | Und-Gatter für Akkumulatorausgänge (Summe) und Zl |
| Os,i,r | = | Oder-Gatter ("wired or") für Mantisse der Summe |
| Ex,Ve | = | Exponentenregister, Summand |

**Tab. 3b**

| | |
|---|---|
| GM | Mantisse der Summe (tri-state-Gatter) |
| GMs | Steuersignal GM auf Bus II |
| Oc | Oder-Gatter ("wired or") keine Reststellen hinter der Mantisse der Summe |
| Zlo | keine "1" im Bereich Zl , |
| Zr (m+1) | keine "1" von rechts bis Stelle m+t |
| Z | ACR enthält keine "1" |
| Vz | Und-Gatter Zr- und Zl-Signale, Ausgang auf Oc |
| EncE | Exponentenverschlüßler |
| Exs | Exponent der Summe |
| Ves | Exponentenvorzeichen der Summe } (tri-state-Gatter) |
| Ts | Überlauf der Summe; (TA) ≠ 0 |
| GEs | Steuersignal der Exponentensignale auf Bus BII |

17

| | |
|---|---|
| Op | Operationssteuersignal: Subtraktion ohne Rücksicht auf das Vorzeichen |
| Contr | Steuerwerk der Schaltungsanordnung |
| Sp | Speicher der Rechenanlage |
| St | Steuerwerk der Rechenanlage |
| OF1, OF | Überlaufsignal $(ACR) > c_{max}$ |
| UF1, UF | Unterlaufsignal $(ACR) < c_{min}$ |
| M1 | Steuersignal Ausgabe kleinste Mantisse, $e_1$ |
| Mo | Steuersignal Ausgabe Mantisse Null, $e_1$ |
| Rd | Steuersignale Rundungsart $\bigcirc, \triangledown, \triangle, \diamondsuit$ |
| Ld | Ladesignale für Contr |

**Tab. 4**

| | |
|---|---|
| ACR | Schieberegister mit m+2.l+t Tetraden |
| SHA | Schiebeimpuls für ACR (m+2L+t Impulse) |
| SHL | letzter Schiebeimpuls der Serien SHA |
| B | Schieberegister sl Tetraden |
| SHB | 2L Impulsserien, Schieben B |
| Ex | Schieberegister für Exponent Summand und Abwärtszähler |
| SHE | Schiebeimpulsserie für Ex |
| Ct- | Zähleingang |
| ExZ | Nullen in Ex |
| Z1 | Schieberegister für Exponent Summe und Abwärtszähler |
| SH, Z1 | Schiebeimpulse für Z1 |
| SZ1 | Setzeingang auf Wert m+t für Z1 |
| Z1Z | Signalausgang (Z1) = Null |
| Ts | Ausgang Überlaufstellenzeiger in Z1 |
| Zr | Zähler Nullen von rechts in ACR, Kapazität L+m+t |
| SZr | Setzeingang Zr auf Anfangswert L |
| Z | (Zr) = L+m+t (alles Eins) $\sim$ (ACR) = 0 |
| Vg | Vergleicher (Zr) $\geq$ (Z1)? |
| Dc | Ausgang von Vg |
| FS | Flipflop wird gesetzt, sobald erste Eins in einer Summe auftritt |
| FI | Flipflop wird mit Überlauf Ce gesetzt für einen Umlauf ACR und steuert Inversion des Ausgangssignales ACR |
| Contr.2 | Signalgenerator für Schiebeimpulsserien und Steuersignale s. Fig. 2a |
| ALU | Seriensummierwerk für Addition, Subtraktion und Transfer (T) von Ai nach Si |
| T | Transfersteuersignal für ALU |
| SB | Steuersignal während Schieben von (B) durch SHB |
| Rd | Signal Runden |
| ALC | Steuerschaltung der ALU |
| GMZ | Steuersignal für Ausgabe aus ACR |
| SA | Steuersignal Summeneingang ALU |

0 079 471

**Tab. 5**

| | |
|---|---|
| ACR | Akkumulatorspeicher mit Worten L1...Ln |
| W | Schreibsignal für ACR |
| Dec | Adressendekoder für ACR |
| Dcn | höchster Ausgang von Dec |
| Z1÷Zn | Speicherstellen Zi je ein Bit pro Wort Li |
| Z | Nor-Gatter, alle (Zi) sind Null ~ (ACR) = 0 |
| PZ | Prüfschaltung: alle Summenstellen im ALU sind Null? |
| ALU | Parallelrechenwerk Länge L |
| Co | Überlaufausgang |
| Cin | Überlaufzwischenspeicher |
| Bo,B1,B2 | Schieberegister für Mantisse Länge 3L für Serien-schiebung und Parallelverschiebung in Wortlänge L |
| SHS | Schiebeimpulse für Bo,1,2 in Serienrichtung |
| SHP | Schiebeimpulse für Bo,1,2 in Parallelrichtung |
| SH | Steuerimpuls während SHP |
| B1U, B2U | Verkopplung in Serienrichtung |
| B2Z | Prüfschaltung: (B2) ≠0 ? |
| Exl | modulo L Zähler für Exponent für L-Stellen (niederwertig) |
| Exn | modulo n Zähler für Exponent für n-Stellen (höherwertig) |
| TrE | Setzen Komplement BI nach Exl und BI obere Stellen nach Exn |
| CEl | Zähleingangsimpulse für Exl |
| CEn | Zähleingangsimpulse für Exn |
| El | (Exl) = L Ausgangssignal |
| En | (Exn) = n Ausgangssignal |
| Ts | Überlaufstellen in Exn |

**Tab. 6**

| | |
|---|---|
| ACR1 | Speicher mit 2L+m+t Stellen |
| ACR2 | wie ACR1 parallel dazu |
| DD | Adreßdekoder Ansteuerung ACR |
| D1 | Zähler und Schieberegister Adresse ACR, modulo 2L+m+t |
| SHD | Schiebesignal für D1 |
| D2 | Zähler, Länge 2L+m+t |
| Cd1, Cd2 | Zählsignale für D1, D2 resp. |
| TrD1, TrD2 | Übernahmesignal (D1)→D2 bzw. (D̄2)→D1 |
| d1, d2 | Endstellungssignal D1, D2 |
| U | Vorzeichensignal zur Multiplexersteuerung MP1, MP2 |
| MP1, MP2 | Parallel- und Kreuzungsmultiplexer |
| M1 | Demultiplexer |
| RmA | Schieberegister für Mantisse oder Exponent Multiplikand A, Länge L |
| SHRA | L Schiebeimpulse für RmA |
| TrE MA | Übernahmeimpuls für (RmA) von Bus 2I |

19

0 079 471

| | | |
|---|---|---|
| Vt | Vielfachtabellenspeicher, Wortlänge 2L | |
| Wv | Schreibsignal für Vt | |
| Rmt | Schieberegister für Vielfache oder Exponent | |
| | | Multiplikand B, Länge 2L |
| Res | Löschsignal für Rmt | |
| SHM | 2L Schiebeimpulse für Rmt | |
| TrEb | Übernahmesignal für Exponent Multiplikand B | |
| DB | Adreßdekoder Ansteuerung Vt | |
| RmB | Schieberegister Multiplikand B, Länge 2L | |
| CB | Adreßzähler Länge Basis b (Tetrade) | |
| b | Endstellungssignal CB | |
| SHmB | L Schiebeimpulse für RmB | |
| CtB | Zählimpuls für Adreßtetrade | |
| TrmB | Übernahmeimpuls für Multiplikanden Mantisse B | |
| Dif | Signal bei verschiedenem Ausgangssignal ACR1, ACR2 | |
| Vs | Vorzeichenflipflop Summe | |
| Z1s | Ausgangssignal Schieberegister Z1 | |
| ClV | Löschsignal | |
| Contr. 4 | Steuerwerk | |
| AD | Addierwerk | |
| ACP | Speicher für Mantisse Produkt, Länge 3L | |
| GPs | Steuersignal Mantisse Produkt auf Bus B II | |

**Patentanspruch**

1. Schaltungsanordnung in einer elektronischen Rechenanlage mit einem Summierwerk (ALU), das eingangs- und ausgangsseitig mit einem Akkumulatorspeicher (ACR) verbunden ist, der aus Zellen (Ai,j) zur Speicherung von Codes einer Basis (b) besteht, und einer Steuervorrichtung (Contr), die eine Summierung von Zahlen (ci), insbesondere Produkten aus Faktoren (pi,qi), die von der Rechenanlage in einer Gleitkommadarstellung mit einem kleinsten und größten Exponenten (e1,e2) und einer Mantisse einer Länge L der Schaltungsanordnung zugeführt werden, und eine Rundung und Ausgabe von der in dem Akkumulatorspeicher (ACR) gebildeten Summe (c) an die Rechenanlage in einer Gleitkommadarstellung steuert, dadurch gekennzeichnet, daß in der Schaltungsanordnung eine Steuerschaltung (Dec; Ui,j,k; Oi,j,k; Contr) für eine Normalisierung der Zahlen in Gleitkommadarstellung, Umwandlung in Festkommadarstellung und Summierung der Zahlen (ci) in einer reinen Festkommadarstellung in den Akkumulatorspeicher (ACR) enthalten und mit diesem und dem Summierwerk (ALU) verbunden ist und der Akkumulatorspeicher (ACR) für Produkte aus einer gewählten Anzahl n, vorzugsweise zwei, Faktoren (pi, qi) ein Speicherregister von einer Länge ist, die der Länge nL bzw. 2L der Mantisse einer der Gleitkommazahlen (ci) zuzüglich einer Länge des n- bzw. 2-fachen der Summe der Beträge des kleinsten und größten Exponenten (el, e2) entspricht, und am Akkumulatorregister (ACR) Steuerschaltungen angeschlossen sind, die der Rückwandlung in eine Ergebnis-Gleitkommadarstellung nebst Rundung dienende Steuersignale (Zr(i), Zl(i), Z, UF, OF, Oc) erzeugen, von denen eine erste Gruppe (Zl(i)) die Lage der Zelle (Ai,j) mit der jeweils höchstwertigen signifikanten Stelle und eine zweite Gruppe (Zr(i)) die Lage der Zellen (Ai,j) aller höherwertigen Stellen beginnend mit der niedrigstwertigen von Null verschiedenen Stelle angeben, und ein erstes Steuersignal (Z) anzeigt, wenn alle Zellen (Ai,j) jeweils Null enthalten, und ein zweites Steuersignal (OC) angibt, wenn jeweils in den Zellen (Ai,j) mindestens eine von Null verschiedene Stelle enthalten ist, die niedrigerwertig ist als ein vorgegebenes Maß (L, 2L, nL) bezogen auf die höchste signifikante Stelle, und ein drittes und viertes Steuersignal (OF, UF) angeben, wenn mindestens eine höherwertige bzw. niedrigerwertige Stelle als die, die in der Ergebnis-Gleitkommadarstellung als höchst- bzw. niedrigstwertige Stelle darstellbar ist, ungleich Null ist.

2. Schaltungsanordnung nach Anspruch 1, dadurch gekennzeichnet, daß mindesten: ein Teil des

20

Akkumulatorspeichers (ACR) ein zum Speicher (Sp) der elektronischen Rechenanlage zusätzlicher unabhängiger Speicher ist.

3. Schaltungsanordnung nach Anspruch 1 oder 2, dadurch gekennzeichnet, daß das Summierwerk (ALU) ein zum Rechenwerk der Rechenanlage zusätzliches Summierwerk ist und das Summierwerk (ALU) vorzugsweise durch eine programmierbare Steuerschaltung (ALC,Contr) mittels Steuersignalen in zeitlicher Folge gesteuert werden und zwar sowohl in Abhängigkeit von Stuersignalen (TrA,TrB,TrV,TrE,GMs,GEs,GCs,0p,C1A, C1B,C1V,C1E), die von der Rechenanlage zugeführt werden als auch von Steuersignalen (Ca,Cs,Z,0c, UF,OF) die von Steuerschaltungen der Schaltungsanordnung selbst erzeugt werden.

4. Schaltungsanordnung nach einem der Ansprüche 1 bis 3, dadurch gekennzeichnet, daß sie ein Mantissenregister (B;B0,B1,B2;Vm) enthält, in das die Mantisse der Zahlen (ci) mittels eines Steuersignals (TrB;TrV) von der Rechenanlage eingeschrieben werden kann, und/oder ein Exponentenregister (Ex,Ve), in das der Exponent der Zahlen (ci) mittsls eines Steuersignals (TrE) von der Rechenanlage eingeschrieben werden kann, mit den angeschlossenen Steuerschaltungen (DecE,Dec,Ui,j,k;0i,j,k;ExZ,Contr Contr 2;E1,Contr 3), die andererseits mit dem Mantissenregister (B;B0,B1,B2) derart vsrbundsn sind, daß es über die genannten Steuerschaltungen mit Eingängen des Summierwerks (ALU) räumlich und/oder zeitlich so verbunden wird, daß eine Summierung entsprechend dem durch den Exponenten bsstimmten jeweiligen Stellenwert von Mantissenstellen und Stellen des Inhalts des Akkumulatorregisters (ACR) erfolgt.

5. Schaltungsanordnung nach Anspruch 4,dadurch gekennzeichnet, daß am Akkumulatorregister (ACR) Gatterschaltungsanordnungen (Us,0s,GM,EnCE,Ves,Exs) angeschlossen sind, über die abhängig von den Steuersignalen (Z1(i),0c, Z1o,UF,0F,Cs,Z) dir Rundung und Ausgabe der Gleitkommazahl (c) erfolgt.

6. Schaltungsanordnung nach einem der Ansprüche 1 bis 5, dadurch gekennzeichnet, daß das Summierwerk (ALU) übereine Gatteranordnung (ALC) addierend oder subtrahierend gesteuert wird abhängig vom Vorzeichen (Vm) der Mantisse und vom Vorzeichen des Inhalts des Akkumulatorregisters (ACR),und das letztgenannte Vorzeichen vorzugsweise nach jeder Summierung durch Speicherung jeweils bei Auftreten eines Überlaufsignals (Ca) aus dem Summierwerk (ALU) in ein Speicherelement (Cs) geschrieben wird.

7. Schaltungsanordnung nach einem der Ansprüche 1 bis 6,da-durch gekennzeichnet, daß zwischen das Akkumulatorregister (ACR) und das Summierwerk (ALU) eine Gatteranordnung (ALUi) geschaltet ist,die durch ein Steuersignal (I),das jeweils bei Auftreten des Überlaufsignals (Ca) erzeugt wird, derart gesteuert wird, daß das Ergebnis der Summation stets als Betrag dem Akkumulatorregister (ACR) zugeführt wird.

8. Schaltungsanordnung nach einem der Ansprüche 1 bis 7, dadurch gekennzeichnet, daß das Summierwerk (ALU) parallel aufgebaut ist und gleich lang ist wie das Akkumulatorregister (ACR) und die Steuerschaltungen (Z1,Zr,Ui,j,k;0F;UF; 0i,j,k; Us,0s,DecE,EncE) räumliche Zuordner sind, die das Mantissenrsgister (B) dem Inhalt des Exponentenregisters (Ex,Ve) entsprechend mit dem einen Eingang des Summierwerks (ALU) verbinden und das Akkumulatorregister (ACR) entsprechend der Lage der hächsten signifikanten Ziffer.in ihm zur Rechenanlage vorzugsweise über Gatter (GM,Gc) und/oder Regiater mit Ausgangsgattern (Exs,Ta,Ves) abhängig von Steuersignalen (GCs,GMs, GEs) verbinden (Fig. 1).

9. Schaltungsanordnung nach einem der Anaprüche 1 bis 7, dadurch gekennzeichnet, daß das Akkumulatorregister (ACR) ein seriell arbeitender Speicher, vorzugsweise ein Schieberegister ist und das Summierwerk (ALU) ein seriell arbeitendes Summierwerk ist und die Steuerschaltungen (Zl, Zr,Vg) und das Exponentenregister (Ve,Ex) vorzugsweise als Zähler und/oder Schieberegister ausgebildet sind und deren Ausgangssignale (EsZ,Z1Z,Z,0c) in eine Ablaufsteuerung (Contr 2) geführt sind, die weitere Zähler um-faßt und Steuersignalfolgen (Ct,SHA,SHB,SB,GMZ) erzeugt, die den Gattern und/oder Schiebeeingängen und/oder Zählund Rücksetzeingängen der Zähler und Schieberegister zugeführt werden und zeitlich diese so ateuern, daß die Zuführung der Mantisse aus dem Mantissenregister (B) entsprechend dem Inhalt des Exponentenregisters (Ex,Ve) erfolgt und die Rundung und Ausgabe der Gleitkommazahl (c) über Gatteranordnungen (GMZ,GEs) bezüglich der zeitlichen Lage der höchsten signifikanten Stelle erfolgt (Fig. 2).

10. Schaltungsanordnung nach den Ansprüchen 1 bis 7, dadurch gekennzeichnet, daß das Akkumulatorregister (ACR) in Abschnitte vorzugsweise von einer Länge (L) eingeteilt ist, auf die parallel zugegriffen werden kann, und das Summierwerk (ALU) parallel von der einfachen bis vierfachen Länge der genannten Abschnitte ist und Steuerschaltungen (Exn;Dec:Z1...Zn;Z) mit den genannten Abschnitten verbunden sind und eine Steuerschaltung (Pz) parallel zum Eingang des Akkumulatorregisters (ACR) geschaltet ist und Zähler (Exl) und/oder Schieberegister in Verbindung mit der Ablaufsteuerung (Contr 3) zeitliche Steuersignalfolgen (SHS,SHP,CZ,CE1,CEn,W) erzeugen, die abhängig von dem Inhalt des Exponentenregisters (Ex1,Exn) die Summierung des Inhalts des Mantissenregisters (BO, B1,B2) steuern und die Rundung und Ausgabe der Gleitkommazahl (c) bezüglich der höchsten signifikanten Stelle steuern (Fig. 3).

11. Schaltungsanordnung nach Anspruch 9, dadurch gekennzeichnet, daß das Akkumulatorregister (ACR) aus zwei Registern (ACRI, ACR2) besteht, von denen jeweils eines durch Steuerschaltungen (M1,MP1,MP2) mit dem Summierwerk (ALU) ein- und ausgangsseitig, gesteuert durch den Inhalt der Vorzeichenstelle (Vm) der Mantisse, verbunden wird und die über Gatterschaltungen vor der Rundung und Ausgabe durch ein Steuersignal (Sub), das von der Ablaufsteuerung (Contr) gebildet wird, mit den Eingängen des Summierwerke (ALU), das subtrahierend gesteuert wird, verbunden wird, wobei die Ein- und Ausgänge der Register (ACR1,ACR2) durch die Steuerschaltungen (M1,MP1,MP2,Vs) so mit dem Summierwerk (ALU) verbunden werden, daß der niedrigere Betrag von dem häheren abgezogen wird (Fig. 4).

12. Schaltungsanordnung nach einem der Ansprüche 1 bis 11, dadurch gekennzeichnet, daß die Faktoren (pi,gi) der Schaltungsanordnung in Gleitkommadarstellung zugeführt und dort in Registern (RmA,RmB,Vm)

21

zwischengespeichert werden und Teile der Schaltungsanordnung vorzugsweise das Summierwerk (ALU), das Mantissenregister (Rmt) und das Exponentenregister (D1) durch Steuersignale der Ablaufsteuerung (Contr 4) so gesteuert werden, daß sie die Produkte (ci) bilden und dem Akkumulatorregister (ACR; ACR1, ACR2) über das Summierwerk (ALU) zuführen (Fig. 4).

13. Schaltungsanordnung nach Anspruch 12, dadurch gekennzeichnet, daß die Exponenten der Faktoren (pi,qi) von der Rechenanlage in Register (RmA,RmB) gespeichert werden und diese gesteuert durch Steuersignale der Ablaufsteusrung (Contr 4) über das Summierwerk (ALU) addiert und dem Exponentenregister (DI) zugeführt werden.

14. Schaltungsanordnung nach Anspruch 12 oder 13, dadurch gekennzeichnet, daß die Mantissen der Faktoren (pi,qi) von der Rechenanlage in Register (RmA,RmB) gespeichert werden und, gesteuert durch Steuersignale der Ablaufsteuerung (Contr 4), über das Summierwerk (ALU) der Inhalt des einen Registers (RmA) vervielfacht und in einem Vielfachentabellenspeicher (Vt) gespeichert wird und entsprechende Vielfache als Teilprodukte gesteuert durch jeweils einen Inhalt einer Stelle des anderen Registers (RmB), der vorzugsweise einem Registerabschnitt (CB) zugeführt wird, aus dem Vielfachentabellenspeicher (Vt) ausgelesen wird, wobei dessen Ausgang mit dem Eingang des Summierwerks (ALU,AD) zur Summierung der Teilprodukte verbunden wird.

15. Schaltungsanordnung nach einem der Ansprüche 1 bis 14, dadurch gekennzeichnet, daß die Steuerschaltung (Contr) abhängig von den Eingangssignalen (Rd;○,∇,△,◇; 0c,Z, UF,0F,Cs), die einerseits von der Rechenanlage und andererseits von der Schaltungsanordnung zugeführt werden, Steuersignale (Dp,M0,M1,0F) erzeugen, die die Rundung und Ausgabe des Inhalts des Akkumulatorregister (ACR) steuern, wobei eines der Steuersignale (MO) die Ausgabe einer Zahl Null bewirkt und ein weiteres Steuersignal (M1) die Ausgabe der betragsmäßig kleinsten Zahl an die Rechenanlage steuert.

16. Verfahren zur Berechnung von Skalarprodukten und Summen mit optimaler Genauigkeit unter Verwendung einer Schaltungsanordnung nach einem der Ansprüche 1 bis 16, dadurch gekennzeichnet, daß bei Ansteuerung einer monotonen und antisymmetrischen Rundung (○) die Schaltungsanordnung so gesteuert wird, daß auf die Stelle des auszugebenden Betrages der Mantisse die niedrigerwertig als deren letzte Ziffer ist, der halbe Wert der Basis (b) vor deren Ausgabe addiert wird und wenn danach Steuersignale (Z, Oc, UF, Zlo) auftreten, die anzeigen, daß alle Stellen im Akkumulator Null sind oder das Ergebnis betragsmäßig kleiner als die kleinste darstellbare Zahl ist, die Zahl Null ausgegeben wird.

17. Verfahren zur Verwendung mit der Schaltungsanordnung nach den Ansprüche 1 bis 15, dadurch gekennzeichnet, daß bei Ansteuerung einer Rundung (◇) nach innen ein Rest des Betrages der Mantisse der auszugebenden Zahl nicht ausgegeben wird und bei Auftreten von Signalen (Z,0c,UF), die anzeigen, daß das auszugeb:nde Ergebnis betragsmäßig kleiner als die kleinste darzustellende Zahl oder Null ist, vorzugsweise durch das Steuersignal (Mo) eine Zahl Null ausgegeben wird.

18. Verfahren zur Verwendung mit der Schaltungsanordnung nach den Ansprüchen 1 bis 15, dadurch gekennzeichnet, daß bei Ansteuerungeiner Rundung (∇) nach unten abhängig von dem Auftreten der Signale (Cs,Z,UF,0c), sofern ein Rest auftritt, eine Rundung jeweils zur nächsten kleineren Zahl erfolgt und dabei bei Auftreten eines positiven Ergebnisses, das betragsmäßig kleiner als die kleinste darstellbare Zahl ist, Null ausgegeben wird und bei Auftreten eines negativen Ergebnisses, das betragsmäßig kleiner als die kleinste darstellbare Zahl ist, die be-tragsmäßig kleinste negative Zahl ausgegeben wird.

19. Verfahren zur Verwendung mit der Schaltungsanordnung nach den Ansprüchen 1 bis 15, dadurch gekennzeichnet, daß bei Ansteuerungeiner Rundung (△) nach oben abhängig von dem Auftreten der Signale (Cs,Z,UF,0c), sofern ein Rest auftritt, eine Rundung jeweils zur nächsten höheren Zahl erfolgt und dabei bei Auftreten eines positiven Ergebnisses, das betragsmäßig kleiner als die kleinste darstellbare Zahl aber nicht Null ist, die betragsmäßig kleinste positive Zahl vorzugsweise durch das Signal (M1) ausgegeben wird und bei Auftreten eines Ergebnisses Null, oder das negativ und betragsmäßig kleiner als die kleinste darstellbare Zahl ist, eine Null ausgegeben wird, wobei vorzugsweise das Vorzeichen der Null positiv ist.

20. Verfahren nach einem der Ansprüche 16 bis 19, dadurch gekennzeichnet, daß die Steuersignale in einer solchen zeitlichen Folge erzeugt werden, daß die Berechnungen der Teiloperationen der Skalarproduktbildung wie Exponentenaddition, Teilproduktbildung, Teilproduktsummierung parallel durchgeführt werden.

21. Schaltungsanordnung nach Anspruch 1 dadurch gekennzeichnet, daß an dem Akkumulatorspeicher (ACR bzw. den Registern bzw. den Zählern Umschaltgatter angeschlossen sind, die die effektive Länge der Speicher bzw. Register bzw. die Kapazität der Zähler einstellen und zwar unter Steuerung entsprechend der Anforderung vom übergeordneten Rechner.

## Claims

1. Circuitry in an electronic computer having a summing unit (ALU) connected at its inputs and outputs to an accumulator register (ACR) comprising cells (Ai, j) for the storing of codes of a base (b) and a control unit (Contr) for controlling a summation of numbers (ci), especially products form facotrs (pi, qi), which are delivered to the circuitry by the computer in a floating point representation comprising a smallest and a greatest exponent (e1, e2) and a mantissa of a length L, and controlling a rounding and delivering to the computer in a floating point representation the sum (c), being generated in the accumulatior register (ACR), the circuitry futher

# 0 079 471

comprises a control circuitry (Dec, Ui,j,k; Oi,j,k; Contr) for normalising of the floating point numbers, converting them in a fixed point representation and summing the numbers (ci) in a pure fixed point representation into the accumulator register (ACR), and the control circuitry being connected to the accumulator register (ACR) and the summing unit (ALU), and for accepting the products made from a given number of n, preferably of two, factors (pi, qi), the accumulator (ACR) being a register store having a length which is equal to the length nL respectively 2L of the mantissa of one of the floating point numbers (ci) and in addition having a length of n times, respectively twice, the sum of the absolute values of the smalest and greatest exponents (el, e2), and further control circuits are connected to the accumulator register (ACR) generating control signals (Zr(i), Zl(i), Z, UF, OF, Oc) for the reconversion into a result floating point representation and rounding such number comprising a first signal group (Zl(i)) signalling the position of the cell (Ak,j) containing the most significant code at that time and comprising a second signal group (Zr(i)) signalling the position of the cell (Ai,j) containing the least significant code being unequal to zero at that time and further signalling all the positions of the more significant cells than this named cell (Ai,j), and comprising a first control signal (Z) signalling, if all cells (Ai,j) are containing zero at that time, and comprising a second control signal (OC) signalling, if at least one of the cells (Ai, j), which is of lower significance compared to a given measure (L, 2L, nL) with relation to the position of highest significance, is containing a code being unequal to zero, and comprising a third and a fourth signal (OF, UF) signalling, if at least one code in a position of higher significance respectively lover significance, which are representable in the result floating point representation, is unequal to zero at that time.

2. Circuitry according to claim 1, comprising a memory (Sp) in the electronic computer and furter another independent memory being at least a part of the accumulator register (ACR).

3. Circiutry according to claim 1 or 2, comprising a summing unit in th computer and furter another summing unit (ALU) which is controlled by a, preferably programmable, control circiut (ALC, Contr) in a time sequence by control signals depending from first control signals (TrA, TrB, TrV, TrE, GMs, GEs, GCs, Op, CIA, CIB, CIV, CIE) being deliverded by the electronic computer and from second control signals (Ca, Cs, Z, Oc, UF, OF) being delivered by the control circuits of the circuitry itself.

4. Circuitry according to claim 1 to 3, comprising a mantissa register (B; BO, B1, B2; Vm) into which the mantissa of the numbers (ci) is loaded from the computer by applying a control signal (TrB, TrV), further comprising an exponent register (Ex, Ve) into which the exponent of the numbers (ci) is loaded from the computer by applying a control signal (TrE), further comprising control circuits (DecE, Dec, Ui,j,k; 0i,j,k; ExZ, Contr, Contr2; El, Contr3), which are connected to the mantissa register (B; B0, B1, B2) such that it is connected to inputs of the summing unit (ALU) via the named control circuits in positions respectively at approprioate times such that a summing is performed, whereby the value of the exponent defines the value of the mantissa positions and the respective positions of the accumulator register (ACR).

5. Circuitry according to claim 4, comprising logic gate circiuts (Us, Os, GM, EnCE, Ves, Exs) being connected to the accomulator register (ACR) which are controlling the rounding and delivering of the floating point number (c) depending from the control signals (ZL(i), Oc, Zlo, UF, OF, Cs, Z).

6. Circuitry according to one of the claims 1 to 5, comprising logic gate circuits (ALC) switching the summing unit (ALU) in an adding or subtracting mode depending first from the sign (Vm) of the mantissa and second from the sign of the contents of the accumulator register (ACR), the second of which is loaded into a storage element (Cs) at the end of each summing operation depending on the occurance of an overflow carry singal (Ca) in the summing unit (ALU).

7. Circuitry according to one of the claims 1 to 6, comprising logic gate circuits (ALUi) being connected between the accumulator register (ACR) and the summing unit (ALU), and being controled by a control signal (I), which is generated if an overflow signal (Ca) occures, and which performs the control such that always the absolute value of the summation result is fed to the accumulator register (ACR).

8. Circuitry according to one of the claims 1 to 7, comprising the summing unit (ALU) being a parallel working unit of a length equal to the length of the accumulator register (ACR), further comprising the control circuits (Zl, Zr; Ui,j, k; OF, UF, 0i,j,k; Us, Os, OecE, EncE) being parallel organized logic circuits, these being controled by control signals (GCs, GMs, GEs) such that the outputs of mantissa register (B) are connected via the circuits to those inputs of the summing unit (ALU), which are given by the contents of the exponent register (Ex, Ve), and further being controled such that a part of the accumulator register (ACR), wich is given by the most significant code contained in the accumulator register (ACR), is connected to the computer via the circuits (GM, Gc) and/or registers (Exs, Ts, Ves) having output gates (Fig. 1).

9. Circuitry according to one of the claimes 1 to 7, comprising a serial working register, preferably a shift register, being the accumulator register (ACR), further comprising the summing unit (ALU) operating serially and comprising the control circuits (Z1, Zr, Vg) and the exponent register (Ve, Ex) preferably are counters and/or shift registers applying control signals (EsZ, ZlZ, Z, Oc) to the control unit (Contr2) containing further counter cicuits and generatin strings of control signals (Ct, SHA, SHB, SB, GMZ), which are applied to the gate, shift, count, and/or reset inputs of the named count and/or shift circuits, whereby these are controled such that the mantissa is delivered by the mantissa register (B) during times given by the contents of the exponent register (Ex, Ve) and that the times of rounding and delivering of the floating point number (c) via gates (GMZ, GEs) are defined relative to the timely appeerence of the most significant code (Fig. 2).

10. Circuitry according to one of the claims 1 to 7, comprising the accumulaor register (ACR) consisting of sections with parallel addressable access preferably of a length (L) and comprising the summing unit (ALU) being organized in parallel having at least the same length as the sections or up to four times this length and

23

comprising control circuits (EXn; DE; Z1....Zn; Z) connected to the named sections and a control circuit (Pz), the inputs of which are connected in parallel to the inputs of the accumulator register (ACR) and comprising counters (Exl) and/or shift registers generating in connection with the control unit (Contr3) strings of control signals (SHS, SHP, CZ, CEI, CEn, W), which are controlling the summing of the contents of the mantissa register (BO, B1, B2) and the rounding and the delivering of the floating point number (c) depending from the contents of the exponent register (Exl, Exn) with respect to the code of maximum significance contained in the accumulator register (ACR) (Fig. 3).

11. Circuitry according to the claim 9, comprising the accumulator register (ACR) having two registers (ACRI, ACR2), which alternatively are connected via multiplexer circuits (M1, MP1, MP2) to the input and output of the summing unit (ALU) under control ot the contents of the sign position (Vm) of the mantissa, further comprising gate circuits which, prior to the rounding and delivering operation, under control of a control signal (Sub), being delivered by the control circuit (Contr) and switching the summing unit (ALU) in a subtraction mode, are connecting the inputs and outputs of the named registers (ACR1, ACR2) via the multiplexer circuits (M1, MP1, MP2, Vs) to the summing unit (ALU) such that the smaller contained absolute value is subtracted from the greater one (Fig.4).

12. Circuitry according to one of the claims 1 to 11, comprising registers (RmA, RmB, Vm) for storing of the floating point numbers (pi, qi) being delivered to the circuitry by the computer, further comprising a control unit (Contr4) applying control signals to a part of the circuitry preferably the summing unit (ALU) and the mantissa register (Rmt) and the exponent register (D1) such that the products (ci) are generated and are fed into the accumulator register (ACR; ACR1, ACR1) via the summing unit (ALU) (Fig.4).

13. Circuitry according to the claim 12, comprising the control unit (Contr4) delivering control signals by the application of which the exponents of the floating point numbers (pi, qi) being transfered from the computer into registers (RmA, RmB) are summed via the summing unit (ALU) and the sum being fed to the exponent register(D1).

14. Circuitry according to claim 12 or 13, comprising the registers (RmA, RmB) to which the mantissas of the factors (pi, qi) are delivered from the computer and under application of control signals of the control circuit (Contr4) multiples of the contents of one of the registers (RmA) being generated via the summing unit (ALU) and stored in a multiples table store (Vt) and further, depending on the contents of the other register (RmB) at that time, which preferably is fed to a register section (CB) a respective multiple partial product is being read from the multiples table store (Vt) while its output is connected to the input of the summing unit (ALU, AD) for the summing of the partial products.

15. Ciruitry according to claim 14, comprising the control circuitry (Contr) generating, dependent from input signals (Rd; ○, ▽, △, ◇; Oc, Z, UF, OF, Cs), some of which are delivered by the computer and others are generated in the circuitry itself, control signals (Op, Mo, M1, OF), which control the rounding and the delivering of the contents of the accumulator register (ACR), thereby one of these control signals (MO), if. active, is delivering the number zero and the other one, the control signal (M1), if active, is delivering the number representing the smallest representable absolute value to the computer.

16. Method for the calculation of scalar products and sums with optimum precision by means of the circuitry according to one of the claims 1 to 15, comprising the circuitry under control of a monotone and antisymmetrical rounding (○) operation, adding half of the value of the base (b) to the position, which is less significant than the least significant position of the mantissa to be delivered, prior to delivering a number, further comprising the circuitry, if after the addition control signals (Z, Oc, UF, Zlo) occure, which signal that all positions in the accumulator are zero or the result is smaller than the smallest representable number, then delivering the number zero.

17. Method for application on the circuitry according to the claims 1 to 15, comprising under control of a rounding (◇) inward operation the circuitry, if a remainder of the absolute value of the mantissa of the number is present, then not delivering it, further if control signals (Z, Oc, UF) occure, which signal that the absolute value of the result to be delivered is smaller than the smallest representable number or zero, then delivering the number zero, preferably the control signal (Mo).

18. Method for application on the circuitry according to the claims 1 to 15, comprising under control of the rounding (▽) downward operation the circuitry performing, independent of the occurence of the control signals (Cs, Z, UF, OF), if a remainder is present, a rounding to the next smaller number, therefor if a positive result is given, which is smaller than the smallest representable number, then delivering the number zero, or if a negative result is given, the absolute value of which is smaller than the smallest representable number, then delivering the negative number having the smallest representable absolute value.

19. Method for application on the circuitry according to the claims 1 to 15, comprising under control of a rounding (△) upward operation the circuitry, if the control signals (Cs, Z, UF, Oc) occure, and if a remainder exists, then performing a rounding to the next greater number, therefor if the result is positive and its absolute value is smaller than the smallest representable number but not zero, then delivering the positive number with the smallest representable absolute value, preferably by the control signal (M1), or if the result is zero or negatvie, and its absolute value is smaller than the smallest representable number, then delivering a zero number, preferably the sign of which is positive.

20. Method according to one of the claims 16 to 19, comprising the control signals being generated in a timely sequence such that the calculation of the partial operations of the scalar product generation, e.g. addition of exponents, generation of partial products, addition of partial products, are performed in parallel.

21. Circuitry according to claim 1, comprising control gates connected to the accumulator register (ACR) respectively the registers respectively the counters controling the effective length of the accumulator register respectively registers or controling the capacity of the counters, such control of the gates being depending on the demand given by the supervising computer.

## Revendications

1. Dispositif dans un ordinateur avec une unite de sommation (ALU), reliée côté entrée et côté sortie à une mémoire d'accumulation (ACR), composé de cellules (Ai,j) pour mémorisation de codes d'une base (b), et avec un dispositif de commande (Contr), par lequel la sommation de nombres (ci), particulièrement de produits de facteurs (pi,qi), conduits de l'ordinateur au dispositif pour former des produits scalaires et des sommes de nombres en virgule flottante avec une précision maximale dans une représentation en virgule flottante avec un exposant minimal et maximal (e1,e2) et une mantisse d'une longueur L, ainsi que l'arrondi et la livraison à l'ordinateur de la somme (c), formée dans la mêmoire d'accumulation (ACR), en représentation en virgule flottante sont commandès, <u>caractérisé par</u> le fait qu'un circuit de commande (Dec: Ui,j,k: Oi,j,k: Contr) pour une normalisation des nombres en représentation en virgule flottante, conversion en représentation en virgule fixe et sommation des nombres (ci) dans une pure représentation en virgule fixe dans une mémoire d'accumulation (ACR), est compris dans le dispositif pour former des produits scalaires et des nombres en virgule flottante avec une précision maximale et relié à la mémoire d'accumulation (ACR) et à l'unité de sommation (ALU), ainsi que par le fait que la mémoire d'accumulation (ACR) pour produits d'un nombre n choisi de facteurs (pi,qi), deux de préférence, est un registre accumulateur d'une longueur correspondant à la longueur nL respectivement 2L de la mantisse de l'un des nombres dans une representation en virgule flottante (ci) plus une longueur de n fois respectivement de 2 fois la somme des montants du plus petit et du plus grand exposant (e1,e2), et par le fait que des circuits de commande sont connectés au registre accumulateur(ACR), lesquels génèrent des signaux de commande (Zr(i), Zl(i), Z, UF, OF, Oc) servant à la reconversion dans une représentation en virgule flottante du résultat à côté de l'arrondi, et dont un premier groupe (Zl(i)) indique la situation des cellules (Ai,k) avec chacun des chiffres significatifs de poids fort en question, et un second groupe (Zr(i) indique la situation des cellules (Ai,j) de tous les chiffres plue élevés en commencant par le chiffre de poids le plus faible différant de zéro, et un premier signal de commande (Z) indique lorsque toutes les cellules (Ai,j) contiennent chacune un zéro, et un deuxième signal de commande (OC) indique lorsque les cellules en question contiennent au moins un chiffre différant de zéro, lequel est de poids plus faible qu'une mesure donnée (L, 2L, nL) par rapport au chiffre significatif le plus élevé, et un troisième et quatrième signal de commande (OF, UF) indiquent lorsqu'au moins un chiffre plus élevé respectivement plus faible que le chiffre que le chiffre représentable dans la représentation en virgule flottante comme chiffre de poids le plus lourd ou le plus faible, est non égal à zéro.

2. <u>Dispositif selon revendication 1</u>, caractérisé par le fait qu'on moins une partie de la mémoire d'accumulation (ACR) est une mémoire supplémentaire, indépendante par rapport à la mémoire (Sp) de l'ordinateur.

3. <u>Dispositif selon revendication 1 ou 2</u>, caractérisé par le fait que l'unité de sommation (ALU) est une unité de sommation supplémentaire par rapport à l'unité de calcul de l'ordinateur et que l'unité de sommation (ALU) est commandée de préférence par un circuit de commande programmable (ALC,Contr), à l'aide de signaux de commande en ordre chronologique, et ceci aussi bien en dépendance de signaux de commande (TrA, TrB, TrV,TrE, GMs,GEs,GCs, Op,CIA,CIB,CIV,CIE), amenés de l'ordinateur, que de signaux de commande (Ca,Cs,Z,Oc, UF,OF), lesquels sont générés par les circuits de commande du dispositif pour former des produits scalaires et des sommes de nombres en virgule flottante avec une precision maximale.

4. <u>Dispositif selon l'une des revendications 1 à 3</u>, caractérisé par le fait qu'il comprend un registre de mantisses (B;BO,BI, B2; Vm), dans lequel la mantisse des nombres (ci) peut être enregistrée par l'ordinateur à l'aide d'un signal de commande (TrB;TrV), et/ou un registre d'exposants (Ex,Ve), dans lequel l'exposant des nombres (ci) peut, être enregistré par l'ordinateur à l'aide d'un signal de sommande (TrE), avec les circuits de commande raccordés (DecE, Dec, Ui,j,k: 0i,j,k: ExZ, Contr, Contr 2: El, Contr 3), lesquels sont reliés d'autre part au registre de mantisses (B: B0,B1,B2) de sorte que celui-ci est relie, par l'intermédiaire des circuits de commande cités, à des entrées de l'unité de sommation (ALU) dans l'espace et dans le temps de façon qu'une sommation des chiffres de mantisses et des chiffres du contenu du registre accumulateur (ACR) a lieu selon le poids de position en question, défini par l'exposant.

5. <u>Dispositif selon revendication 4</u>, caractérisé par le fait que circuits combinatoires (Us,0s,GM,EnCE,Ves,Exs) sont connectés au registre accumulateur (ACR), par l'intermédiaire desquels l'arrondi et la sortie d'un nombre dans une représentation en virgule flottante (c) a lieu en dépendance des signaux de commande (Z1(i),0c,Z10,UF,0F, Cs,Z).

6. <u>Dispositif selon l'une des revendications 1 à 5</u>, catactérisé par le fait que l'unité de sommation (ALU) est commandée par l'intermédiaire d'un dispositif de circuits combinatoires (ALC) additionnant ou soustrayant en dépendance du signe (Vm) de la mantisse et du signe du du contenu du registre accumulateur (ACR), et par le fait que le signe cité en dernier lieu est enregistré de préférenée après chaque sommation,chaque fois que se produit un signal de débordement (Ca) de l'unité de sommation (ALU) dans un élément de mémoire (Cs).

7. <u>Dispositif selon l'une des revendications 1 à 6</u>, caracterisé par le fait qu'entre le registre accumulateur (ACR) et l'unité de sommation (ALU) un dispositif de circuits combinatoires (ALUi) est connecté, lequel est commandé par un signal de commande (I), généré chaque fois que se produit un signal de débordement (Ca), de sorte que le résultat de la sommation est toujours conduit au registre accumulateur (ACR) en tant que montant.

8. Dispositif selon l'une des revendications 1 à 7, caractérisé par le fait que l'unité de sommation (ALU) est montée parallélément et est aussi longue que le registre accumulateur (ACR) et que les circuits de commande (Zl, Zr,Ui,j,k; OF;UF:0i,j,k;Us,0s,DecE,EncE) sont des programmes d'affectation dans l'espace qui relient le registre de mantisses (B),conformément au contenu du registre d'exposants (Ex,Ve), à une entrée de l'unité de sommation (ALU) et relient le registre accumulateur (ACR), conformément à la position occupée en lui par le chiffre significatif le plus élevé par rapport à l'ordinateur, de préférence par l'intermédiaire de circuits combinatoires (GM,Gc) et/ou registres, avec des portes de sortie (Exs,Ts,Ves) en dépendance de signaux de commande (GCs,GMs,GEs) (fig. 1).

9. Dispositif selon l'une des revendications 1 à 7, cractérisé par le fait que le registre accumulateur (ACR) est une mémoire travaillant en série, de préférence un registre à décalage, et que l'unité de sommation (ALU) est une unité de sommation travaillant en série, et que les circuits de commande (Z1,Zr,Vg) et le registre d'exposants (Ve,Ex) sont concus de préférence sous forme de compteurs et/ou de registres à décalage et que leurs signaux de sortie (EsZ,Z1Z,Z,0c) sont conduits dans une commande de déroulement des tàches (Contr 2), laquelle comprend d'autres compteurs et génère des suites de signaux de sommande (Ct,SHA,SHB,SB,GMZ) qui sont conduits aux portes et/ou aux entrées à décalage et/ou aux entrées de comptage et de retour en arriere des compteurs et registres à décalage, et commande ceux-ci dans le temps de sorte que l'amenée de la mantisse en provenance du registre de mantisses (B) a lieu conformément au contenu du registre d'exposants (Ex,Ve) et que l'arrondi et la sortie du nombre dans une représentation en virgule flottante (c) a lieu par l'intermédiaire de circuits combinatoires (GMZ,GEs) en ce qui concerne la position dans le temps du chiffre significatif le plus élevé (fig.2).

10. Dispositif selon l'une des revendications 1 à 7, caractérisé par le fait que le registre accumulateur (ACR) est divisé en sections de préférence d'une longueur (L), auxquelles il peut être accédé parall*élément, et que l'unité de sommation (ALU) est parall*élément de la longueur simple à la longueur quadruple des sections citées et que des circuits de commande (Exn:Dec:Z1...Zn;Z) sont reliés aux sections citées et qu'un circuit de commande (pz)'est connecté parallélément par rapport à l'entrée du registre accumulateur (ACR) et que des compteurs (Exl) et/ou des registres à décalage, en liaison avec la commande de déroulement des tâches (Contr3) génèrent des suites de signaux de commande chronologiques (SHS,SHP,CEi, CZ,CEn,W) lesquels en dépendance du contenu du registre d'exposants (Exl,Exn) commandent la sommation du contenu du registre de mantisses (B0,B1,B2) et commandent l'arrondi et la sortie du nombre en virgule flottante (c) quant au chiffre significatif le plus élevé (fig.31).

11. Dispositif selon revendication 9, caractérisé par le fait que le registre accumulateur (ACR) consiste en deux registres (ACRI, ACR2), dont chacun à son tour est relié par des circuits de commande (M1,MP1.MP2) à l'unité de sommation (ALU) côté entrée et côté sortie, commande par le contenu de la position du signe (Vm) de la mantisse, lesquels registres sont, par l'intermédiaire de circuits combinatoires, avant l'arrondi et la sortie, par un signal de commande (Sub), formé par la commande de déroulement des tàches, reliés aux entrées de l'unité de sommation (ALU), commandée soustrayante, les entrées et sorties du registre (ACR1,ACR2) étant reliées à l'unité de sommation (ALU) par les circuits de commande (M1,MP1,MP2,Vs) de sorte que le montant plus faible soit retranché du montant plus élevé (fig.4).

12. Dispositif selon l'une des revendications 1 à 11, caractérisé par le fait que les facteurs (pi,qi) sont conduits dans une representation en virgule flottante au dispositif pour former des produits scalaires et des sommes de nombres en virgule flottant avec précision maximale et y sont mémorisé temporairement dans des registres (RmA, RmB,Vm) et que des parties du dispositif pour former des produits scalaires et des sommes de nombres en virgule flottante avec une precision maximale, de préférence l'unité de sommation (ALU), le registre de mantisses (Rmt) et le registre d'exposants (D1) sont commandées par des signaux de commande de la commande de déroulement des tàches (Contr 4) de sorte qu'elles forment les produits (ci) et les conduisent au registre accumulateur (ACR:ACRI,ACR2) en passant par l'unité de sommation (ALU) (fig.4).

13. Dispositif selon revendication 12, caractérisé par le fait que les mantisses des facteurs (pi,qi) sont mémorisés par l'ordinateur dans des registres (RmA,RmB) et, commandés par des signaux de commande de la commande de déroulement des tâches (Contr 4), sont additionnés en passant par l'unité de sommation (ALU) et conduits au registre d'exposants (D1).

14. Dispositif selon reventication 12 ou 13,
caractérisé par le fait que
les mantisses des facteurs (pi,qi) sont mémorisées par l'ordinateur dans des registres (RmA,RmB) et que, commandé par des signaux de commande de la commande de déroulement des tâches (Contr 4), en passant par l'unité de sommation (ALU), le contenu de l'un des registres (RmA) est multiplié et mémorisé dans une mémoire de tableaux multiples (Vt) et que des multiples correspondants, en tant que produits partiels, commandés chacun par un contenu d'une position de l'autre registre (RmB), lequel est conduit de préférence à une section de registre (CB), sont sélectionnés du mémoire de tableaux multiples (Vt), la sortie de celuici étant reliée à l'entrée de l'unité de sommation (ALU, AD) pour sommation des produits partiels.

15. Dispositif selon l'une des reventications 1 à 14, caractérisé par
le fait que le circuit de commande (Contr), en dépendance des signaux d'entrée (Rd:$\bigcirc$, $\nabla$, $\triangle$, $\diamondsuit$; Oc, Z, UF, OF, Cs), amens, d'une part, de l'ordinateur et, d'autre part, du montage de circuits'génère des signaux de commande (Op,MO,M1,OF), lesquels commandent l'arrondi et la sortie du contenu du registre accumulateur (ACR), l'un des signaux de commande (MO) ayant pour effet la sortie d'un chiffre zéro et un autre signal de commande (M1) conduisant à l'ordinateur la sortie du nombre le plus petit en tant que montant. > >16. Procédé pour le calcul des produits scalaires et desommes avec une précision optinale en utilisant un dispositif selon l'une des reventications 1 à 15, caractérisé par le fait que lors

de l'excitation d'un aarondi monotone et antisymétrique (◯), le dispositif pour former des produits scalaires et des nombres en virgule flottante avec une précision maximale est commandé de sorte qu'à la position du montant de la mantisse à sortir, laquelle est plus faible que son dernier chiffre, est additionnée la demi-valeur de la base (b) avant sa sortie, et que, lorsqu'après cela, des signaux de commande (Z, Oc, UF, Zio) se produisent, indiquant que tous les nombres dans l'accumulateur sont des zéros ou que le résultat en tant que montant est plus petit que le plus petit nombre représentable, le nombre zéro est sorti.

17. Procédé à utiliser avec le dispositif selon lesrevendications 1 à 15, caractérisé par le fait que lors de l'excitation d'un arrondi (◇) vers l'intérieur, un reste du montant de la mantisse du nombre à sortir n'est pas extrait et que, lorsque se produisent des signaux (Z,OC,UF) indiquant que le resultat à sortif en tant que montant est plus petit que le plus petit nombre à représenter ou zéro, un nombre zero est extrait de préférence par le signal de commande (Mo).

18. Procédé à utiliser avec le dispositif selon lesrevendications 1 à 15, caractérisé par le fait que lors de l'excitation d'un arrondi (▽) vers le bas en dépendance de la manifestation des signaux (Cs,Z,UF,Oc), tant qu'un reste se présente, un arrondi a lieu chaque fois au nombre inférieur suivant et qu'alors lors de l'apparition d'un résultat positif plus petit en tant que montant que le plus petit nombre représentable, zero est sorti, et lors de l'apparition d'un résultat négatif, plus petit en tant que montant que le plus petit nombre représentable, le nombre négatif le plus petit en tant que montant est sorti.

19. Procédé à utiliser avec le dispositif selon lesreventications 1 à 15, caractérisé par le fait que lors de l'excitation d'un arrondi (△) vers le haut en dépendance de l'apparition des signaux (Cs,Z,UF,0c), tant qu'un reste se présente, un arrondi a lieu chaque fois au nombre supérieur et qu'alors, lors de l'apparition d'un résultat positif, plus petit en tant que montant que le plus petit nombre représentable mais qui n'est pas zéro,, le nombre positif le plus-pétit en tant que montant est sorti de préférence par le signal (M1) et que lors de l'apparition d'un résultat zéro ou négatif et plus petit en tant que montant que le plus petit nombre représentable, un zéro est sorti, le signe du zéro étant de préférence positif.

20. Procédé selon l'une des revendications 15 à 19, caractérisé par le fait que les signaux de commande sont générés dans un ordre chronologique tel que les calculs des opérations partielles de la formation de produits scalaires, comme addition d'exposants, formation de produits partiels, sommation de produits partiels, sont exécutés parallèlement

21. Dispositif selon revendication 1,
caractérisé par le fait qu'à la mémoire d'accumulation (ACR) respectivement aux registres ou aux compteurs des portes d'inversion sont raccordées, lesquelles règlent la longueur effective des mémoires respectivement des registres ou la capacité des compteurs. et ceci en commande conforme aux exigences du calculateur prioritaire.

Fig.1

0079 471

Fig.1a

Fig.1b

Fig.1c

*Fig.1d*

| Inputs | | | | | Outputs | |
|---|---|---|---|---|---|---|
| Sub (Ai – Bi) | Add | Ai | Bi | Cs(i–1) | Si | Csi |
| (0) | 1 | 0 | 0 | .0 | 0 | 0 |
| 0 | 1 | 0 | 0 | 1 | 1 | 0 |
| 0 | 1 | 0 | 1 | 0 | 1 | 0 |
| 0 | 1 | 0 | 1 | 1 | 0 | 1 |
| (0) | 1 | 1 | 0 | 0 | 1 | 0 |
| 0 | 1 | 1 | 0 | 1 | 0 | 1 |
| 0 | 1 | 1 | 1 | 0 | 0 | 1 |
| (0) | 1 | 1 | 1 | 1 | 1 | 1 |
| (1 | 0 | 0 | 0 | 0 | 0 | 0) |
| 1 | 0 | 0 | 0 | 1 | 0 | 1 |
| 1 | 0 | 0 | 1 | (0) | 1 | 1 |
| (1 | 0 | 0 | 1 | 1 | 1 | 1) |
| (1 | 0 | 1 | 0 | 0 | 1 | 0) |
| 1 | 0 | 1 | 0 | 1 | 0 | 0 |
| 1 | 0 | 1 | 1 | 0 | 0 | 0 |
| (1 | 0 | 1 | 1 | 1 | 1 | 1) |

*Fig. 1e*

Fig.2

0 079 471

Fig.3

0 079 471

Fig.4

13

Fig.5a

| t | 2e2 | 2L | 2|e1| |

Fig.5b

SD ─→ [A] ─→

| t | 2e2 | 2L | 2|e1| |

Fig.5c

| t | L | L | L | L | L | L | L | L | L | L |

Fig.5d

| | | L | L | L | PSW

↑ ↑ ↑

| L | L | L | SHR

Fig.5e

SD ─→ [A] ─→ | | | L | L | L |

Fig.6

SHR

ALU ─ L ─

pi,qi ─→ mpi mqi ─→ VT    RD ─→ $c_a$,OF,UF

epi eqi ─→ E

Rd: ○△▽,◇

Contr.

ACR1,ACR2
S1,S2

Fig.7